# EUROPEAN PATENT SPECIFICATION

(11) **EP 4 340 448 B1**
(45) Date of publication and mention of the grant of the patent: **25.03.2026**
(21) Application number: 21948892.1
(22) Date of filing: 09.07.2021
(51) Int. Cl.: H04W 36/00, H04W 48/18, H04W 48/16

(54) **USING SLICE INFORMATION**
VERWENDUNG VON SLICE-INFORMATIONEN
UTILISATION D'INFORMATIONS DE TRANCHE

(43) Date of publication of application: 20.03.2024
(73) Proprietor: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LU, Qianxi, Dongguan, Guangdong 523860 (CN)
(74) Representative: Novagraaf Technologies
(86) International application number: PCT/CN2021/105599
(87) International publication number: WO 2023/279398

(56) References cited:
- EP-A1- 4 195 778
- EP-B1- 3 589 064
- CN-A- 111 770 517
- CN-A- 111 866 991
- CN-A- 113 016 210
- CN-A- 113 016 210
- US-A1- 2021 136 675
- NOKIA ET AL: "Slice specific cell reselection", vol. RAN WG2, no. Electronic; 20210519 - 20210527, 11 May 2021 (2021-05-11), XP052006897, Retrieved from the Internet <URL:https://ftp.3gpp.org/tsg_ran/WG2_RL2/TSGR2_114-e/Docs/R2-2105240.zip R2-2105240 Draft TDoc_slicing.docx> [retrieved on 20210511]
- HUAWEI ET AL: "Slice Availability for Cell (Re-)Selection", vol. RAN WG2, no. Qingdao, China; 20170527 - 20170529, 17 June 2017 (2017-06-17), XP051307131, Retrieved from the Internet <URL:http://www.3gpp.org/ftp/tsg_ran/WG2_RL2/TSGR2_AHs/2017_06_NR/Docs/> [retrieved on 20170617]
- SPREADTRUM COMMUNICATIONS: "Cell Reselection Based on Slice Information", vol. RAN WG2, no. Berlin, Germany; 20170821 - 20170825, 20 August 2017 (2017-08-20), XP051319090, Retrieved from the Internet <URL:http://www.3gpp.org/ftp/Meetings_3GPP_SYNC/RAN2/Docs/> [retrieved on 20170820]
- LENOVO, MOTOROLA MOBILITY (RAPPORTEUR): "Summary of [AT114-e][250][Slicing] Usage of slice priorities for cell", 3GPP DRAFT; R2-2106501, vol. RAN WG2, 26 May 2021 (2021-05-26), pages 1 - 31, XP052014344

## Description

### TECHNICAL FIELD

The disclosure relates to the field of mobile communications, and particularly to a method and apparatus for using slice information.

### BACKGROUND

There is a growing demand for performance of a mobile communication network by various industries. At present, for a mobile communication network, a distinct service may be provided with a more targeted, more flexible, more scalable service with a lower latency by network slicing based on a radio access network (RAN).

However, use of slice information of network slicing is to be discussed and studied further.

CN113016210A discloses a cell determination method applied in a terminal. The method includes: receiving slice-related information from a non-access stratum by an access stratum; and performing a cell selection and/or a cell reselection based on the slice-related information.

CN111770517A discloses a method for configuring a frequency priority. The method includes: sending a first request message to a core network device; receiving, from the core network device, a response message for the first request message; configuring frequency priority information for the terminal device according to the response message; and sending the configured frequency priority information to the terminal device.

Lenovo, Motorola Mobility (Rapporteur): "Summary of [AT114-e][250] [Slicing] Usage of slice priorities for cell", 3GPP Draft; R2-2106501, vol. RAN WG2, 26 May 2021 discusses that frequency priority mapping for each slice (slice -> frequency(ies) -> absolute priority of each of the frequency) is provided to a UE; RAN2 kindly allows one more meeting cycle for understanding the necessity of Slice priority; and RAN2 considers a scenario in its work for slice specific cell (re)selection where it is possible that (Suitable) cells on the same frequency belonging to different TAs support different Slice(s).

CN111866991A discloses a terminal access method and device. In the terminal access method, the terminal can receive slice frequency information sent by the network, determine the corresponding relationship between different slices and frequencies, and then select a suitable target frequency for cell access/reselection/switching based on its own supported slices, or select a suitable target frequency as the highest priority frequency for cell access/reselection/switching.

US2021/136675A1 discloses a method of selecting a network slice performed by a user equipment (UE). The method includes: receiving information about at least one network slice and information about frequency operating bands that are allowed for the at least one network slice; selecting a base station (BS) to be accessed, based on the received information about the at least one network slice and the information about the frequency operating bands that are allowed for the at least one network slice; and performing a registration procedure on the selected BS.

NOKIA ET AL: "Slice specific cell reselection", 3GPP DRAFT; R2-2105240, 3GPP, MOBILE COMPETENCE CENTRE discusses that use of the slice information broadcast about the cell itself during cell reselection requires the UEs to acquire SIBs of cells that are not selected; and use of the slice information broadcast about the cell itself during cell reselection will lead an increased cell reselection time and UE power consumption.

### SUMMARY

The present invention is set out in the appended set of claims.

The claimed invention provides a method and apparatus for using slice information.

In accordance with the invention, a method for using slice information performed by a terminal device is provided in claim 1.

In accordance with the invention, an apparatus for using slice information is provided in claim 9.

A technical solution provided by the disclosure has at least beneficial effects as follows.

At least one of cell selection, cell measurement, cell search, or cell reselection is performed using slice information, implementing more reasonable cell selection, cell measurement, cell search, and cell reselection for different slice information, increasing the possibility for the UE to camp on a target cell capable of providing a desired slice service.

### BRIEF DESCRIPTION OF THE DRAWINGS

Drawings for describing embodiments of the disclosure are introduced hereinafter briefly for clearer illustration of a technical solution of embodiments of the disclosure. Note that the drawings described hereinafter refer merely to some embodiments of the disclosure. A person having ordinary skill in the art may acquire other drawings according to the drawings herein without creative effort.
FIG. 1 is a diagram of a scenario of network slice deployment according to an illustrative embodiment of the disclosure.
FIG. 2 is a diagram of a system architecture of a communication system according to an illustrative embodiment of the disclosure.
FIG. 3 is a flowchart of a method for using slice information according to an embodiment of the disclosure.
FIG. 4 is a flowchart of a method for using slice information according to an embodiment of the disclosure.
FIG. 5 is a flowchart of a method for using slice information according to an embodiment of the disclosure.
FIG. 6 is a flowchart of a method for using slice information according to an embodiment of the disclosure.
FIG. 7 is a flowchart of a method for using slice information according to an embodiment of the disclosure.
FIG. 8 is a block diagram of an apparatus for using slice information according to an embodiment of the disclosure.
FIG. 9 is a block diagram of a determining sub-module according to an embodiment of the disclosure.
FIG. 10 is a block diagram of an adjusting sub-module according to an embodiment of the disclosure.
FIG. 11 is a diagram of a structure of a terminal according to an illustrative embodiment of the disclosure.

### DETAILED DESCRIPTION

To clearly show a technical problem to be solved, a technical solution, and beneficial effects of the disclosure, implementation of the disclosure is further elaborated hereinafter with reference to the drawings.

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Terms used in the disclosure are for describing specific embodiments instead of limiting the disclosure. Singulars "alan", "said" and "the" used in the disclosure and the appended claims are intended to include the plural form, unless expressly illustrated otherwise by context. The term "and/or" used in the disclosure refers to and includes any or all possible combinations of one or more associated items listed.

Note that although a term such as first, second, third may be adopted in the disclosure to describe various kinds of information, such information should not be limited to such a term. Such a term is merely for distinguishing information of the same type. For example, without departing from the scope of the disclosure, the first information may also be referred to as the second information. Similarly, the second information may also be referred to as the first information. Depending on the context, a term "if" as used herein may be interpreted as "when" or "while" or "in response to determining that".

### Network slicing

There is an increasingly high requirement on performance of a mobile communication network in various industries. Support to a specific service by a radio access network (RAN) is to be boost to improve the performance of the mobile communication network such as delay, mobility, robustness, location precision, etc., such as through RAN-based network slicing in one mode. Network slicing may apply to a specific service. A network slice has its own topology, virtual network resource, traffic, configuration rule, etc. A network slice may be a set of network functions with a specific radio configuration and a specific transmission configuration, capable of providing one set of network devices with multiple distinct end-to-end virtual networks, such as a network slice provided specifically for an internet of things (IOT) service, a network slice provided specifically for a vehicle to everything (V2X) service, a network slice provided specifically for a specific user, etc. In setting up an RAN-based network slice, a service provider may be involved in RAN design, deployment, and operation, thereby better supporting a service provided by the service provider as needed by the service provider.

A focus in a release17 (R17) is enhancing a RAN that supports network slicing, specifically to enable a user equipment (UE) to have fast access to a cell supporting a network slice desired by the UE, including to perform cell reselection by the UE based on the network slice, and to determine, based on the network slice, a limit on configuring or accessing a random access channel (RACH) of the UE.

### Cell reselection

In cell reselection, a UE monitors, in an idle mode, signal quality of a cell to which the UE is having access (also referred to as a serving cell), and signal quality of a neighbouring cell of the cell to which the UE is having access, and thereby select and access a cell of a best signal.

The UE is to access and camp on a neighbouring cell when the level and the signal quality of the neighbouring cell meet a Srxlev (S) criterion, and when a certain reselection decision criterion is met. A reselection decision criterion may include that in performing cell selection and cell reselection, to meet load balancing in the idle mode, the UE is to perform cell reselection based on a frequency priority (a priority of a frequency corresponding to a cell).

Having camped on a cell, the UE may perform measurement on the cell continuously. At a radio resource control (RRC) layer, an S value is to be computed according to reference signal received power (RSRP) as measured, and compared to a threshold Sintrasearch for initiating intra-frequency measurement, and to a threshold Snonintrasearch for initiating inter-frequency measurement or inter-radio access technology (IRAT) measurement, to determine whether the UE is to initiate the measurement of signal quality of a neighbouring cell. The S value may be the S criterion in cell selection, with a formula Srxlev = Qrxlevmeas - (qRxLevMin+qRxLevMinOffset) - pCompensation. The S criterion = measured cell RSRP value - {minimum received level (0-128dbm in general) + offset to the qRxLevMin (0 in general) }- power compensation (0 in general).

The UE may perform cell reselection on an intra-frequency cell, or an inter-frequency cell having the same frequency priority, using an R criterion. Specifically, the UE may rank cells by signal quality, and select a cell with the best signal quality as a candidate cell. The UE may handover to a cell corresponding to a high frequency priority via reselection, as long as the signal quality of the cell meets a certain threshold. The UE may handover to a cell corresponding to a low frequency priority via reselection just when the signal quality of the serving cell of the UE is lower than a certain threshold.

### Network slice deployment

A network slice may be identified by single network slice selection assistance information (S-NSSAI). S-NSSAI may be used to identify a single network slice. An S-NSSAI set may be referred to as network slice selection assistance information (NSSAI). NSSAI may include multiple S-NSSAIs.

To use a network slice, the UE first is to send a request to a network device. After granting the request, the network device may set up a protocol data unit session (PDU session) in the network slice, thereby implementing data transmission through the network slice.

The UE is to include S-NSSAI of a requested network slice in an NSSAI request (Requested NSSAI) according to a service used. The Requested NSSAI is to be included in a registration request and sent to an access and mobility management function (AMF). The AMF may determine allowed NSSAI according to UE subscription information and a range where the network slice is deployed, include the allowed NSSAI in a registration accept message, and send the registration accept message to the UE. The AMF may further include the allowed NSSAI in an N2 message and send the N2 message to a RAN device such as a base station.

Having received the allowed NSSAI, the UE may set up a PDU session in a network slice corresponding to the allowed NSSA. Having set up the PDU session, the UE may send and receive data in the network slice.

During network deployment, each network slice may cover a distinct range. In determining the allowed NSSAI, the AMF is to make sure that each network slice corresponding to the allowed NSSA covers a registration area (TrackingArea List, TA List) the AMF allocates to the UE. The AMF may acquire S-NSSAI supported by the base station and a TA corresponding to the S-NSSAI supported by the base station from the base station through an NG setup request or RAN configuration update signalling.

In the R17, the UE in an idle/inactive mode may read slice information of a network slice supported by the base station (including the frequency priority of each frequency corresponding to the slice) as broadcast in system information of a cell, to select a cell corresponding to a high frequency priority and supporting a service used by the UE (a network slice corresponding to the service). A non-access stratrum (NAS) of the UE is to provide an access stratum (AS) with allowed NSSAI, thereby ensuring that the UE selects a cell supporting a network slice corresponding to the allowed NSSA, preparing for subsequent service transmission.

Specifically, slice information indicated by a network device may include a frequency priority mapping for each network slice, such as a correspondence among a network slice, frequency(ies), and an absolute priority of each of the frequencies. Optionally, the slice information may be slice information of a network slice in a network slice group (that is, the slice may also mean slice group).

Alternatively, the slice information indicated by the network device may include a frequency priority mapping for each network slice, such as a correspondence among a network slice, frequency(ies), and an absolute priority of each of the frequency. The slice information may be part of slice information agreed to be provided to the UE using both broadcast and dedicated signalling.

Illustratively, a case of network slice deployment is as follows.

Different frequencies may support the same network slice, or may support different network slices.

One network slice may correspond to different frequencies having identical frequency priorities or different frequency priorities.

One frequency supports different network slices. That is, different cells of the same frequency support different network slices.

A network slice may correspond to a frequency of the same frequency priority or of different frequency priorities. That is, there may be the same reselection priority, or different reselection priorities, of reselection to different cells of the same frequency.

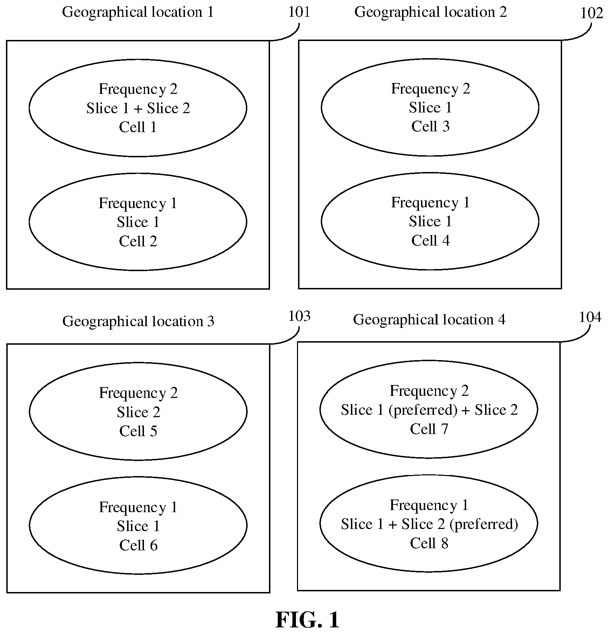

Illustratively, FIG. 1 is a diagram of a scenario of network slice deployment according to an illustrative embodiment of the disclosure. As shown in FIG. 1, there may be a cell 1 and a cell 2 in an area 101 at a geographical location 1. The cell 1 may correspond to a frequency 2, and support a network slice 1 and a network slice 2. The cell 2 may correspond to a frequency 1, and support the network slice 1. There may be a cell 3 and a cell 4 in an area 102 at a geographical location 2. The cell 3 may correspond to the frequency 2, and support the network slice 1. The cell 4 may correspond to the frequency 1, and support the network slice 1. There may be a cell 5 and a cell 6 in an area 103 at a geographical location 3. The cell 5 may correspond to the frequency 2, and support the network slice 2. The cell 6 may correspond to the frequency 1, and support the network slice 1. There may be a cell 7 and a cell 8 in an area 104 at a geographical location 4. The cell 7 may correspond to the frequency 2, and support the network slice 1 (preferred) and the network slice 2. The cell 8 may correspond to the frequency 1, and support the network slice 1 and the network slice 2 (preferred).

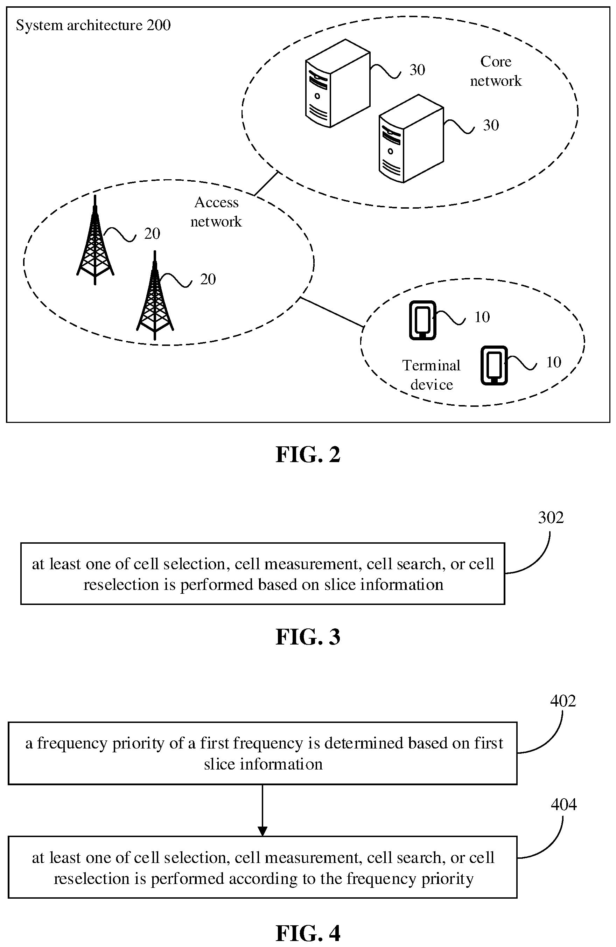

FIG. 2 is a diagram of a system architecture of a communication system according to an embodiment of the disclosure. The system architecture may include a terminal device 10, an access network device 20, and a core network device 30.

The terminal device 10 may refer to a user equipment (UE), an access terminal, a user unit, a user station, a mobile station, a remote station, a remote terminal, a mobile device, a radio communication device, a user agent, or a user apparatus, etc. Optionally, the terminal device may further be a cell phone, a cordless phone, a session initiation protocol (SIP) phone, a wireless local loop (WLL) station, a personal digital assistant (PDA) device, a handheld device capable of radio communication, a computing device, or another processing device connected to a radio modem, an onboard device, a wearable device, a terminal device in 5GS, or a terminal device in a future evolved public land mobile network (PLMN), etc., which is not limited in embodiments of the disclosure. For ease of description, an aforementioned device may be collectively referred to as a terminal. In general, there may be multiple terminal devices 10. One or more terminal devices 10 may be distributed in a cell managed by an access network device 20.

An access network device 20 may be a device deployed in an access network to provide a radio communication function to a terminal device 10. The access network device 20 may include various forms of macro base stations (BSs), micro BSs, relays, access points, etc. In systems using different radio access technologies, devices having access network device functions may be given different names. For example, such a device may be referred to as a gNodeB or a gNB in a 5th Generation (5G) new radio (NR) system. The name "access network device" may change as communication technologies evolve. For ease of description, in embodiments of the disclosure, a device providing a radio communication function to a terminal device 10 may be collectively referred to as an access network device. Optionally, communication between a terminal device 10 and the core network device 30 may be established through the access network device 20. Illustratively, the access network device 20 may be an evolved universal terrestrial radio access network (EUTRAN) or one or more eNodeBs in the EUTRAN in a long term evolution (LTE) system. The access network device 20 may be a radio access network (RAN) or one or more gNBs in the RAN in a 5G new radio (5G NR) system.

The core network device 30 mainly serves to provide a user connection, user management, and a service bearer, as an interface provided by a bearer network to an external network. For example, a core network device in a 5G NR system may include a device such as an AMF entity, a user plane function (UPF) entity, and a session management function (SMF) entity, etc.

In an example, the access network device 20 and the core network device 30 may communicate with each other through an over-the-air technology such as an NG interface in a 5G NR system. The access network device 20 and a terminal device 10 may communicate with each other through an over-the-air technology such as a Uu interface.

FIG. 3 is a flowchart of a method for using slice information according to an embodiment of the disclosure. FIG. 3 is illustrated by applying the method to a terminal device in the communication system as shown in FIG. 2. The method includes an operation as follows.

At S302, at least one of cell selection, cell measurement, cell search, or cell reselection is performed based on slice information.

The slice information may be indicated by a network device. The network device may be an access network device 20 in FIG. 2. For example, the network device indicates the slice information to the terminal device through a system message. The system message may include at least one of a system information block 2 (SIB2), a system information block 3 (SIB3), a system information block 4 (SIB4), or another (new) system information block (SIB). Alternatively, the network device may indicate the slice information through a dedicated RRC message. For example, the dedicated RRC message may be an RRC release message.

Optionally, the slice information includes at least one of:
a first correspondence between a slice and a frequency;
a second correspondence among the slice, the frequency, and a cell identity;
a third correspondence among the slice, the frequency, and a slice-based frequency priority;
a fourth correspondence among the slice, the frequency, the slice-based frequency priority, and the cell identity;
the slice-based frequency priority;
a slice list of user equipment (UE) desired slices; or
a slice priority.

The frequency may be a frequency corresponding to a slice. Different slices may correspond to the same frequency or different frequencies, and different frequencies may correspond to an identical slice or different slices. The cell identity may be used to identify a cell, and may specifically be a physical cell identity (PCI). The slice-based frequency priority may refer to a priority of a frequency configured at slice granularity. For different slices, one frequency may correspond to the same frequency priority or different frequency priorities. For example, the value of a priority ranges from 0 to 7. The frequency 1 may be of a frequency priority 3 corresponding to the slice 1. The frequency 1 may be of a frequency priority 4 corresponding to the slice 2. The greater the value of a frequency priority is, the higher the frequency priority.

Optionally, for different PCIs, the same frequency (or the same frequency and the same slice) may correspond to the same frequency priority or different frequency priorities.

At least one of the slice list of the UE desired slices or the slice priority may be provided by a non-access stratum (NAS) of the UE. Illustratively, the UE may acquire the information through the NAS, through NAS signalling (provided by a network element of the core network), or through information stored at the UE such as subscription information, information preset in a user identification card, etc.

Optionally, during performing at least one of cell selection, cell measurement, cell search, or cell reselection based on the slice information, the terminal device determines a frequency priority of a frequency based on the slice information, and then performs at least one of cell selection, cell measurement, cell search, or cell reselection based on the frequency priority. The terminal device may perform cell measurement, cell search, and cell reselection differently for different slice information. Illustratively, a frequency priority determined for one frequency differs for different slice information. Different frequency priorities are to further impact performance of at least one of cell selection, cell measurement, cell search, or cell reselection. For example, in the slice information, the fact of whether there is a slice-based frequency priority may impact the frequency priority determined for a frequency by the terminal device.

A slice-based frequency priority may refer to one of the following: a frequency priority configured for a frequency for each slice; a frequency priority configured for a frequency for each slice supported by the frequency; or a frequency priority configured for a frequency for each slice of the network device. The same frequency priority or different frequency priorities may be determined for the same frequency for different slice information. Optionally, frequency priorities corresponding to the same slice and the same frequency may differ for different PCIs.

Illustratively, compared to a slice-based frequency priority, a first frequency priority may refer to a frequency priority of a frequency configured at frequency granularity (instead of the slice granularity), and may also be referred to as a legacy frequency priority. A first frequency priority may be a frequency priority determined based on a frequency, a frequency priority determined based on a cell, or a frequency priority determined based on both the frequency and the cell. Alternatively, in case a slice-based frequency priority is as defined in a release Rx of a 3rd generation partnership project (3GPP), a first frequency priority may be as defined for a frequency according to a communication protocol before the release Rx. For example, in case a slice-based frequency priority is as defined in a release R17 of the 3GPP, a first frequency priority is as defined for a frequency according to a communication protocol before R17.

### I. Frequency priority determination

Optionally, the frequency includes a first frequency. The first frequency may be any frequency for which a frequency priority is to be determined. Alternatively, the first frequency may be a frequency corresponding to any cell on which cell selection, cell measurement, cell search, or cell reselection is to be performed. Optionally, the terminal device determines a frequency priority differently for slice information including different information. Optionally, the terminal device determines frequency priorities for different slice information in at least one manner as follows.

**In case the slice information does not include a slice-based frequency priority**
**(1) A frequency priority of the first frequency may be determined to be a first frequency priority based on the slice information.**

The terminal device determines the frequency priority of the first frequency to be the first frequency priority in case the slice-based frequency priority is not acquired. The first frequency priority may be an original priority of the first frequency as indicated by the network device, and be unrelated to the slice information. Optionally, in this case the first frequency is a frequency supporting a target slice.

**(2) Based on the slice information, a frequency priority of the first frequency is determined according to whether the first frequency supports a target slice.**

In case the slice-based frequency priority is not acquired, the terminal device determines the frequency priority of the first frequency according to whether the first frequency supports the target slice. In this case, the first frequency is any frequency, or a frequency supporting the target slice.

Illustratively, the operation that the terminal device determines the frequency priority of the first frequency according to whether the first frequency supports the target slice includes at least one of the following.
a. According to whether the first frequency supports the target slice, the terminal device may determine the frequency priority of the first frequency to be a highest frequency priority, or determine that the frequency priority of the first frequency is higher than a frequency priority of a frequency other than the first frequency.

For example, in case the first frequency supports the target slice, the terminal device determines, in the above manner, the frequency priority of the first frequency. That is, when the terminal device fails to acquire the slice-based frequency priority based on the slice information, and when the terminal device determines that the first frequency supports the target slice, the terminal device may set the frequency priority of the first frequency as the highest.

b. According to whether the first frequency supports the target slice, the terminal device may determine the frequency priority of the first frequency to be a lowest frequency priority, or determine that the frequency priority of the first frequency is lower than the frequency priority of the frequency other than the first frequency.

For example, in case the first frequency does not support the target slice, the terminal device determines, in the above manner, the frequency priority of the first frequency. That is, when the terminal device fails to acquire the slice-based frequency priority based on the slice information, and when the terminal device determines that the first frequency does not support the target slice, the terminal device may set the frequency priority of the first frequency as the lowest.

c. The terminal device may determine the frequency priority of the first frequency to be a first priority according to whether the first frequency supports the target slice. Alternatively, the terminal device may determine the frequency priority of the first frequency to be a second priority according to whether the first frequency supports the target slice.

For example, the terminal device determines the frequency priority of the first frequency to be the first priority in case the first frequency supports the target slice. Alternatively, the terminal device may determine the frequency priority of the first frequency to be the second priority in case the first frequency does not support the target slice. The second priority may not be higher than the first priority. That is, in case the terminal device fails to acquire the slice-based frequency priority based on the slice information, the terminal device may determine the frequency priority of the first frequency according to whether the first frequency supports the target slice. In addition, a frequency priority of a frequency A not supporting the target slice may not be higher than a frequency priority of a frequency B supporting the target slice.

Alternatively, the terminal device may determine the frequency priority of the first frequency to be the first priority in case the first frequency supports the target slice. The terminal device may determine the frequency priority of the first frequency to be the second priority in case the first frequency does not support the target slice. The first priority may be higher than the second priority. That is, in case the terminal device fails to acquire the slice-based frequency priority based on the slice information, the terminal device may determine the frequency priority of the first frequency according to whether the first frequency supports the target slice. In addition, a frequency priority of a frequency B supporting the target slice may be higher than a frequency priority of a frequency A not supporting the target slice.

d. The terminal device may determine the frequency priority of the first frequency based on the number of target slices supported by the first frequency.

Optionally, the frequency priority of the first frequency determined by the terminal device is positively correlated with the number of target slices supported by the first frequency. Alternatively, in case the number of target slices supported by the first frequency reaches a threshold, or is the maximal of numbers of target slices supported by respective frequencies, the terminal may determine the frequency priority of the first frequency to be a highest frequency priority.

For example, the more target slices are supported by the first frequency, the higher the frequency priority of the first frequency determined by the terminal device. Alternatively, the threshold may be 2. When the number of target slices supported by the first frequency reaches 2, the terminal device may determine the frequency priority of the first frequency to be the highest.

Optionally, the terminal device determines the frequency priority of the first frequency according to the number of target slices supported by the first frequency and a first frequency priority.

For example, the terminal device first determines the frequency priority of the first frequency to be the first frequency priority of the first frequency, then adjusts, based on the number of target slices supported by the first frequency, the frequency priority of the first frequency determined before. The more target slices the first frequency supports, the greater is the amount by which the frequency priority is increased.

Optionally, the target slice includes at least one of:
any slice;
a user equipment (UE) desired slice;
an intersection of UE desired slices and slices supported by a network (such as a cell);
a slice in a first correspondence;
a slice in a second correspondence;
a slice in a third correspondence; or
a slice in a fourth correspondence.

Optionally, the UE desired slice includes at least one of:
a configured slice;
an allowed slice;
a requested slice;
a target slice;
1 or N slices in a slice list;
1 or N slices of top slice priorities in the slice list;
first 1 or N slices in a first correspondence;
first 1 or N slices in a second correspondence;
first 1 or N slices in a third correspondence; or
first 1 or N slices in a fourth correspondence.

Optionally, slices in the first correspondence, slices in the second correspondence, slices in the third correspondence, and slices in the fourth correspondence are further respectively ranked according to slice priorities. The UE desired slice may include at least one of: the first (highest) ranked slice in the first correspondence, the first ranked slice in the second correspondence, the first ranked slice in the third correspondence, or the first ranked slice in the fourth correspondence.

**In case the slice information includes a slice-based frequency priority**
In case the slice-based frequency priority is acquired, the terminal device may determine the frequency priority of the first frequency based on the slice information including the slice-based frequency priority. For example, the terminal device determines the frequency priority based on the slice information including the third correspondence among the slice, the frequency, and the slice-based frequency priority. Alternatively, the terminal device may determine the frequency priority based on the slice information including the fourth correspondence among the slice, the frequency, the slice-based frequency priority and the cell identity. Optionally, the terminal device may determine the frequency priority of the first frequency to be the first frequency priority even when the slice information includes a slice-based frequency priority.
**(1) Based on the slice information, the frequency priority of the first frequency may be determined according to whether the first frequency supports the target slice.**

For example, in case the slice-based frequency priority is acquired, the terminal device may determine the frequency priority of the first frequency according to whether the first frequency supports the target slice. Optionally, for a specific process, refer to how the terminal device determines the frequency priority of the first frequency according to whether the first frequency supports the target slice in case the slice information does not include a slice-based frequency priority, which is not repeated herein. In this case, the first frequency is any frequency, or a frequency supporting the target slice.

**(2) Based on the slice information, a frequency priority of the first frequency may be determined according to a frequency priority corresponding to a target slice supported by the first frequency.**

The terminal device may determine the frequency priority of the first frequency according to a frequency priority corresponding to the target slice. In this case, the first frequency is a frequency supporting the target slice.

For example, in case the slice-based frequency priority is acquired, the terminal device may determine the frequency priority of the first frequency according to a frequency priority corresponding to a target slice supported by the first frequency. Optionally, in this case the terminal device may determine the frequency priority of the first frequency to be a highest frequency priority, a lowest frequency priority, any frequency priority, or an average frequency priority, of frequency priorities corresponding to target slices supported by the first frequency.

Illustratively, the target slices supported by the first frequency include the slice 1 (frequency priority 1), the slice 2 (frequency priority 3), and a slice 3 (frequency priority 5). According to the frequency priorities corresponding to the target slices supported by the first frequency, the terminal device may determine the frequency priority of the first frequency to be 5 (the highest frequency priority), 1 (the lowest frequency priority), 3 (the any frequency priority, such as the frequency priority of the slice 2), or 3 (the average frequency priority).

**(3) Based on the slice information, the frequency priority of the first frequency may be determined according to the number of target slices supported by the first frequency and frequency priorities corresponding to the target slices supported by the first frequency.**

For example, in case the slice-based frequency priority is acquired, the terminal device is to determine the frequency priority of the first frequency according to the number of target slices supported by the first frequency, as well as the frequency priorities corresponding to the target slices supported by the first frequency. In this case, the first frequency is a frequency supporting the target slices. Optionally, the number of target slices supported by the first frequency and the frequency priorities corresponding to the target slices supported by the first frequency are to jointly impact the frequency priority of the first frequency determined by the terminal device. The terminal device may determine the frequency priority of the first frequency according to both a frequency priority determined based on the number of target slices supported by the first frequency, and a frequency priority determined based on the frequency priorities corresponding to the target slices supported by the first frequency.

Alternatively, the frequency priority of the first frequency may be determined according to both the number of target slices supported by the first frequency, and frequency priorities corresponding to the target slices. For example, the terminal device first determines the frequency priority of the first frequency according to frequency priorities corresponding to the target slices, and then adjusts the determined frequency priority according to the number of the target slices supported by the first frequency. A final (determined) frequency priority of the first frequency may be positively correlated with the number of target slices supported by the first frequency.

Illustratively, the target slices supported by frequency 1 include the slice 1 (frequency priority 1), the slice 2 (frequency priority 3), and the slice 3 (frequency priority 5). Target slices supported by frequency 2 may include the slice 1 (frequency priority 1), the slice 2 (frequency priority 3), the slice 3 (frequency priority 5), and a slice 4 (frequency priority 3). The terminal device may determine the frequency priority of the frequency 1 to be 3 according to an average value of frequency priorities corresponding to the target slices supported by the frequency 1. The terminal device may determine the frequency priority of the frequency 2 to be 3 according to an average value of frequency priorities corresponding to target slices supported by the frequency 2. However, the frequency 2 may support more target slices than the frequency 1 does. Therefore, a final frequency priority of the frequency 1 determined by the terminal device may be lower than a final frequency priority of the frequency 2 determined by the terminal device.

**(4) Based on the slice information, in case the first frequency does not support a target slice, the frequency priority of the first frequency may be determined according to a frequency priority corresponding to another slice supported by the first frequency.**

For example, in case the slice-based frequency priority is acquired, and the first frequency does not support the target slice, the terminal device is to determine the frequency priority of the first frequency according to the frequency priority corresponding to the another slice supported by the first frequency. In this case, the first frequency is a frequency not supporting the target slice.

Illustratively, the target slice includes the slice 1, the slice 2, and the slice 3. The first frequency may support a frequency 4, a frequency 5, and a frequency 6. In this case, the terminal device may determine the frequency priority of the first frequency according to a frequency priority corresponding to the frequency 4, a frequency priority corresponding to the frequency 5, and a frequency priority corresponding to the frequency 6. For example, the frequency priority of the first frequency is determined to be the highest frequency priority, the lowest frequency priority, any frequency priority, or the average frequency priority among a frequency priority corresponding to the frequency 4, a frequency priority corresponding to the frequency 5, and a frequency priority corresponding to the frequency 6.

### II. Performing at least one of cell selection, cell measurement, cell search, or cell reselection

### Cell measurement or cell search

The terminal device may perform cell measurement or cell search using a frequency priority determined hereinbefore based on the slice information, or a first frequency priority. In addition, a measurement rule used may be a first measurement rule or a second measurement rule.

Illustratively, the first measurement rule is also referred to as a legacy measurement rule, and may refer to performing cell measurement or cell search without considering (or without using) slice information. The second measurement rule may also be referred to as an improved measurement rule, and may refer to performing cell measurement or cell search by considering (or using) slice information. Alternatively, in case the second measurement rule is as defined in a release Rx of the 3GPP, the first measurement rule may be as defined according to a communication protocol before the release Rx. For example, in case the second measurement rule is as defined in a release R17 of the 3GPP, the first measurement rule is as defined according to a communication protocol before R17.

Optionally, for different frequency priorities and different measurement rules, the terminal device performs cell search or cell measurement in at least one mode as follows.
(1) **Cell measurement or cell search may be performed based on the first measurement rule using the first frequency priority.**

During performing cell measurement or cell search on a first frequency or a cell corresponding to the first frequency, the terminal device may perform cell measurement or cell search on the first frequency or the cell corresponding to the first frequency according to the first measurement rule using the first frequency priority of the first frequency. Optionally, the first frequency priority used may be a first frequency priority determined hereinbefore based on the slice information. Alternatively, instead of being a first frequency priority determined based on the slice information, the first frequency priority used may be a first frequency priority determined directly. Illustratively, applying the first measurement rule, the terminal device determines, according to the S value, whether to initiate the signal quality measurement for a neighbouring cell.

Illustratively, the first measurement rule is as follows.

Signal quality of a cell may have to meet the S criterion for cell selection in order for the UE in the idle state or the inactive state to camp on the cell. Having selected a suitable cell, the UE is to perform cell reselection assessment continuously. Measurement to be performed for cell reselection assessment may be partitioned and performed according to a reselection priority (determined based on a frequency priority) of each frequency, specifically as follows.

Measurement on a neighbouring cell may be always performed for a frequency of a high frequency priority.

The UE may stop intra-frequency measurement on a neighbouring cell when each of the RSRP of the serving cell and a reference signal received quality (RSRQ) value of the serving cell is higher than an intra-frequency measurement threshold configured by the network. Otherwise, intra-frequency measurement is to be performed on a neighbouring cell when not each of the RSRP and the RSRQ value of the serving cell is higher than the intra-frequency measurement threshold.

The UE may stop measurement on a neighbouring cell of a frequency of the same frequency priority or of a lower frequency priority when each of the RSRP of the serving cell and the RSRQ value of the serving cell is higher than an inter-frequency measurement threshold configured by the network. Otherwise, the measurement is to be performed on a neighbouring cell when not each of the RSRP and the RSRQ value of the serving cell is higher than the inter-frequency measurement threshold.

**(2) Cell measurement or cell search may be performed based on the second measurement rule using the first frequency priority.**

During performing cell measurement or cell search on a first frequency or a cell corresponding to the first frequency, the terminal device may perform cell measurement or cell search on the first frequency or the cell corresponding to the first frequency further according to the second measurement rule using the first frequency priority of the first frequency.

Illustratively, the second measurement rule is as follows.

In case the first frequency supports a target slice, the terminal device may conditionally or unconditionally perform cell measurement or cell search on the first frequency or the cell corresponding to the first frequency, or continuously perform cell measurement or cell search on the first frequency or the cell corresponding to the first frequency.

Illustratively, the condition includes that the terminal device computes the S value, and determines whether an initiating condition for measuring signal quality of a neighbouring cell is met. By continuously performing cell measurement or cell search on the first frequency or the cell corresponding to the first frequency, it may mean that the terminal device continuously performs cell measurement or cell search on the first frequency or the cell corresponding to the first frequency, ignoring any condition. Optionally, the terminal device performs cell measurement or cell search in the mode, according to the frequency priority of the first frequency determined based on the slice information, or according to the first frequency priority of the first frequency.

**(3) Cell measurement or cell search may be performed based on the first measurement rule using the frequency priority determined based on the slice information.**

During performing cell measurement or cell search on a first frequency or a cell corresponding to the first frequency, the terminal device may perform cell measurement or cell search on the first frequency or the cell corresponding to the first frequency further according to the first measurement rule using the frequency priority of the first frequency determined based on the slice information. In this case, a result of determining whether to initiate cell measurement may change depending on whether the frequency priority determined based on the slice information or the first frequency priority is used.

**(4) Cell measurement or cell search may be performed based on the second measurement rule using the frequency priority determined based on the slice information.**

During performing cell measurement or cell search on a first frequency or a cell corresponding to the first frequency, the terminal device may perform cell measurement or cell search on the first frequency or the cell corresponding to the first frequency further according to the second measurement rule using the frequency priority of the first frequency determined based on the slice information.

### Cell selection or cell reselection

The terminal device may perform cell selection or cell reselection using a frequency priority determined hereinbefore based on the slice information, or a first frequency priority. In addition, a reselection rule used may be a first reselection rule or a second reselection rule.

Illustratively, the first reselection rule is also referred to as a legacy reselection rule, and may refer to performing cell selection or cell reselection without considering (or without using) slice information. The second reselection rule may also be referred to as an improved reselection rule, and may refer to performing cell selection or cell reselection by considering (or using) slice information. Alternatively, in case the second reselection rule is as defined in a release Rx of the 3GPP, the first reselection rule may be as defined according to a communication protocol before the release Rx. For example, in case the second reselection rule is as defined in a release R17 of the 3GPP, the first reselection rule is as defined according to a communication protocol before R17.

Optionally, for different frequency priorities and different reselection rules, the terminal device performs cell selection or cell reselection in at least one mode as follows.
**(1) Cell selection or cell reselection may be performed based on the first reselection rule using the first frequency priority.**

During performing cell selection or cell reselection on a candidate cell, the terminal device may perform cell selection or cell reselection on the candidate cell according to the first reselection rule using the first frequency priority corresponding to the candidate cell. Optionally, the first frequency priority used may be a first frequency priority determined hereinbefore based on the slice information. Alternatively, instead of being a first frequency priority determined based on the slice information, the first frequency priority used may be a first frequency priority determined directly.

Illustratively, the first reselection rule is as follows.

Having acquired multiple candidate cells through measurement, the UE may reselect a cell on a frequency of a high frequency priority first, specifically as follows.

A cell on a frequency of a high frequency priority may be reselected if the signal quality of the cell is higher than a certain threshold for a specified duration, and the UE has been camping on the original cell for no less than 1 second.

As for intra-frequency and equal priority inter-frequency cell reselection, an R criterion (cells are ranked by RSRPs) should be met. Signal quality of a new cell is better than that of the current cell for a specified duration, and the UE has been camping on the original cell for no less than 1 second.

A cell on a frequency of a low frequency priority may be reselected, if no cell on a frequency of a high frequency priority or of the same frequency priority meets the requirement, signal quality of the original cell is lower than a certain threshold, signal quality of the cell on the frequency of the low frequency priority is higher than a certain threshold for a specified duration, and the UE has been camping on the original cell for no less than 1 second.

During intra-frequency and equal priority inter-frequency cell reselection, when there are multiple candidate cells meeting the requirement, the UE will rank the multiple candidate cells by RSRPs to select the highest ranked cell as the target cell for cell reselection.

**(2) Cell selection or cell reselection may be performed based on the second reselection rule using the first frequency priority.**

During performing cell selection or cell reselection on a candidate cell, the terminal device may perform cell selection or cell reselection on the candidate cell according to the second reselection rule using the first frequency priority corresponding to the candidate cell.

Illustratively, the second reselection rule is as follows.

The terminal device may adjust at least one of a candidate cell or a target frequency based on slice information corresponding to the candidate cell or whether the candidate cell supports a target slice. Then, the terminal device may perform cell selection or cell reselection according to the first reselection rule. A candidate cell may be a target cell for cell reselection. A target frequency may be a frequency corresponding to a candidate cell.

Optionally, the terminal device performs the adjustment before cell measurement, before making a reselection decision, or before reselecting the target cell (the cell to which the terminal device moves through reselection) from the candidate cell.

The terminal device may determine whether a candidate cell supports a target slice based on information indicated by the network device. For example, the terminal device determines whether the candidate cell supports the target slice according to intra-cell broadcast of the serving cell, according to an RRC release message, or according to a SIB read in the candidate cell (acquired by performing measurement on the candidate cell).

Illustratively, adjustment made based on whether the candidate cell supports the target slice is performed in at least one mode as follows.

Optionally, the candidate cell includes a first cell.
**a. In case the first cell supports the target slice, a reselection priority of reselection to the first cell may be raised to a first priority, or a frequency priority of the target frequency may be raised to a second priority.**
**b. In case the first cell does not support the target slice, the first cell may be skipped, or the target frequency may be skipped, or the reselection priority of reselection to the first cell may be lowered to a third priority, or the frequency priority of the target frequency may be lowered to a fourth priority.**

The first priority may be higher than the third priority. The second priority may be higher than the fourth priority. By skipping a target frequency, it may mean that the target frequency is not taken as a target of reselection. By skipping the first cell, it may mean that the first cell is not taken as a target of reselection. Optionally, the first cell is one of the following: a highest ranked cell in a reselection list, a cell of a best measurement result, or a suitable cell.

Optionally, the terminal device determines whether the first cell supports the target slice according to information indicated by the network (such as frequency or neighbouring cell information indicated by intra-cell broadcast or an RRC release message). The terminal device may also determine whether the first cell supports the target slice according to a SIB read in the first cell (acquired by performing measurement on the first cell).

Illustratively, the second priority/the first priority acquired by the terminal device by performing the adjustment is higher than the reselection priority of the first cell/the target frequency before the adjustment, and the third priority/the fourth priority is lower than the reselection priority of the first cell/the target frequency before the adjustment. Alternatively, the second priority/the first priority may be higher than the reselection priority of a cell other than the first cell/a frequency other than the target frequency, and the third priority/the fourth priority may be lower than the reselection priority of the cell other than the first cell/the frequency other than the target frequency. A reselection priority before the adjustment may be determined based on the first frequency priority.

Further, the first cell or the target frequency may be skipped in case the first cell does not support the target slice, and different frequency priorities of the target frequency are configured for different cell identities.

The terminal device may lower the reselection priority of reselection to the first cell to the third priority or lower the frequency priority of the target frequency to the fourth priority in case the first cell does not support the target slice, and identical frequency priorities of the target frequency are configured for different cell identities.

Illustratively, the target slice is the slice 1. The cell 1 does not support the slice 1. Different frequency priorities may be configured for the frequency 1 corresponding to the cell 1 for different cells (cell identities). That is, cells of the same frequency may have different frequency priorities. In performing cell reselection, the terminal device may skip the cell 1 or the frequency 1. The target slice may be the slice 1, the cell 2 does not support the slice 1, and the same frequency priority may be configured for the frequency 2 corresponding to the cell 2 for different cells (cell identities). That is, cells of the same frequency may have identical frequency priorities. In performing cell reselection, the terminal device may lower the reselection priority of the cell 2 to the third priority, or lower the frequency priority of the frequency 2 to the fourth priority.

**c. The first cell or the target frequency may be skipped in case the first cell supports the target slice, different frequency priorities of the target frequency are configured for different cell identities, and a frequency priority corresponding to the first cell is not a frequency priority of the target frequency configured for the first cell.**

Illustratively, the target slice is the slice 1, the cell 3 supports the slice 1, and the same frequency priority is configured for the frequency 3 corresponding to the cell 3 for different cells (cell identities). That is, cells of the same frequency may have identical frequency priorities. In addition, the terminal device may determine that a frequency priority (used in cell reselection) corresponding to the first cell is not a frequency priority of the frequency 3 configured for the first cell. In this case, the terminal device may skip the cell 3 or the frequency 3.

Illustratively, adjustment made based on the slice information corresponding to the candidate cell is performed in at least one mode as follows.

Optionally, the candidate cell includes a second cell.

**d. The second cell may be skipped, or the target frequency may be skipped, or a reselection priority of reselection to the second cell may be lowered to a third priority, or a frequency priority of the target frequency may be lowered to a fourth priority, in case it is determined through measurement that the second cell supports the target slice but a cell identity of the second cell differs from a target cell identity.**

The second cell may be a cell acquired by performing measurement on the target frequency according to a target frequency priority. The target cell identity may be configured by the network to correspond to the target frequency priority, the target slice, and the target frequency. The terminal device may acquire the information through the slice information.

Illustratively, when the terminal device finds out, in performing cell reselection according to the target frequency priority, that the cell 4 found through measurement supports the slice 4 corresponding to the target frequency priority, but that the PCI of the cell 4 differs from a cell identity (indicated by the network and corresponding to an intra-frequency cell of the cell 4) corresponding to the target frequency priority, the slice 4, and the frequency 4 (corresponding to the cell 4), the terminal device may lower the reselection priority of the cell 4 to the third priority, or lower the frequency priority of the frequency 4 to the fourth priority.

Note that the same adjustment strategy may also apply to cell measurement and cell search to adjust a frequency priority used in cell measurement and cell search, or decide whether to skip a cell/frequency. Then cell search or cell measurement may be performed based on the first measurement rule or the second measurement rule. In this case, the combination of the adjustment strategy with the first measurement rule or the second measurement rule may be deemed as another second measurement rule.

**(3) Cell selection or cell reselection may be performed based on the first reselection rule using the frequency priority determined based on the slice information.**

During performing cell selection or cell reselection on a candidate cell, the terminal device may perform cell selection or cell reselection on the candidate cell further according to the first reselection rule using the frequency priority (based on which the reselection priority of the candidate cell may be determined) determined based on the slice information. In this case, a result of determining whether to reselect a certain candidate cell may change depending on whether the frequency priority determined based on the slice information or the first frequency priority is used.

**(4) Cell selection or cell reselection may be performed based on the second reselection rule using the frequency priority determined based on the slice information.**

During performing cell selection or cell reselection on a candidate cell, the terminal device may perform cell selection or cell reselection on the candidate cell further according to the second reselection rule using the frequency priority (based on which the reselection priority of the candidate cell may be determined) determined based on the slice information.

Optionally, a frequency priority of the frequency applied during cell measurement or cell search is identical to, or different from, a frequency priority of the frequency applied during cell reselection or cell selection.

Illustratively, the terminal device performs cell measurement or cell search, and cell reselection or cell selection, using the frequency priority of the frequency determined based on the slice information. Optionally, in this case, the terminal device uses the first measurement rule and the first reselection rule.

Alternatively, the terminal device may perform cell measurement or cell search using a first frequency priority of the frequency, and perform cell reselection or cell selection using the frequency priority of the frequency determined based on the slice information. Optionally, in this case, the terminal device uses the second measurement rule, while using the first reselection rule.

The terminal device may further perform cell selection and cell reselection using the second measurement rule. Optionally, in this case, the terminal device uses the first frequency priority. Use of a distinct frequency priority in cell measurement, cell search, cell selection, and cell reselection may impact a result of performing the cell measurement, cell search, cell selection, and cell reselection. For example, the first frequency priority corresponding to a cell is lower than a frequency priority corresponding to the cell determined based on the slice information. In cell reselection, the terminal device may not reselect the cell when the first frequency priority corresponding to the cell is used, and may reselect the cell when the frequency priority corresponding to the cell determined based on the slice information is used.

Note that each of the 4 modes of performing cell measurement or cell search may be combined with each of the 4 modes of performing cell selection or cell reselection, leading to 16 modes of performing cell measurement or cell search, and cell selection or cell reselection.

Illustratively, information sent by the network device to the UE includes a correspondence among: a list of slice groups, a frequency corresponding to a slice in the list of slice groups, a frequency priority of the frequency, and a cell identity (PCI).

A value of the frequency priority may be in a legacy range of 0-7 (where the greater the value is, the higher the priority). A cell identity may reflect a cell supporting a slice group. The information may be provided in a SIB or an RRC release message. The slice priority of a UE desired slice may be provided by UE implementation, RRC, or the NAS of the UE.

The terminal device may reselect a cell as follows.

At S1, slices may be listed in an order of decending slice priorities, starting from a slice of a highest priority.

At S2, the first slice (or the next slice if from S7) in the list may be selected.

At S3, a priority may be assigned to a cell according to a frequency corresponding to a frequency priority provided to the selected slice.

At S4, cell search/measurement may be performed according to the first measurement rule using the priority assigned in S3.

At S5, the flow may exit if a highest ranked cell is suitable and serves the slice selected in S2.

At S6, the flow may return to S4 or S3 if there are remaining cells/frequencies.

At S7, the flow may return to S2 if the slice list is not empty.

At S8, cell reselection may be performed according to the first reselection rule (using the first frequency priority).

Optionally, the above flow may not include S7, or the "or the next slice if from S7" in S2.

Alternatively, the terminal device may reselect a cell as follows.

At S1, slices may be listed in an order of decending slice priorities, starting from a slice of a highest priority.

At S2, the first slice (or the next slice if from S6) in the list may be selected.

At S3, a priority may be assigned to a cell according to a frequency corresponding to a frequency priority provided to the selected slice.

At S4, cell measurement may be performed according to the first measurement rule using the priority assigned in S3.

At S5, the flow may exit if a suitable cell is found and serves the slice selected in S2, or if a suitable cell is found.

At S6, the flow may return to S2 if the slice list is not empty.

At S7, cell reselection may be performed according to the first reselection rule (using the first frequency priority).

Optionally, the above flow does not include S6.

To sum up, with the method according to the embodiment, at least one of cell selection, cell measurement, cell search, or cell reselection is performed using slice information, implementing more reasonable cell selection, cell measurement, cell search, and cell reselection for different slice information, increasing the possibility for the UE to camp on a target cell capable of providing a desired slice service.

The terminal device may determine a frequency priority of a frequency based on slice information including different information, and then perform at least one of cell selection, cell measurement, cell search, or cell reselection accordingly. Optionally, the slice information includes at least one of:
a first correspondence between a slice and a frequency;
a second correspondence among the slice, the frequency, and a cell identity;
a third correspondence among the slice, the frequency, and a slice-based frequency priority;
a fourth correspondence among the slice, the frequency, the slice-based frequency priority, and the cell identity;
the slice-based frequency priority;
a slice list of user equipment (UE) desired slices; or
a slice priority.

Illustratively, the frequency priority is determined based on the slice information including different information, and then cell selection, cell measurement, cell search, or cell reselection is perform accordingly, in 4 modes (illustrated as 4 embodiments) as follows.

### Mode 1 (basic mode)

The basic mode illustrates how the frequency priority of the frequency is determined based on the slice information including different information, and how cell measurement, cell search, cell reselection, as well as cell selection is implemented accordingly.

FIG. 4 is a flowchart of a method for using slice information according to an embodiment of the disclosure. FIG. 4 is illustrated by applying the method to a terminal device in the communication system as shown in FIG. 2. The method includes operations as follows.

At S402, a frequency priority of a first frequency is determined based on first slice information.

The first slice information may be indicated by a network device. The network device may be an access network device 20 in FIG. 2. For example, the network device indicates the slice information to the terminal device through a system message. The system message may include at least one of a system information block 2 (SIB2), a system information block 3 (SIB3), a system information block 4 (SIB4), or another (new) system information block (SIB). In addition, the network device further indicates the slice information through a dedicated RRC message. For example, the dedicated RRC message may be an RRC release message. The first frequency may be any frequency for which a frequency priority is to be determined.

Optionally, the frequency priority of the first frequency is determined according to the first slice information in at least one mode as follows.

**The frequency priority of the first frequency may be determined according to whether the first slice information includes the** slice-based frequency priority.
**(1) The frequency priority of the first frequency is determined to be the first frequency priority in case the** slice-based frequency priority **is not acquired.**

When the slice-based frequency priority is not acquired, it means that the first slice information does not include a slice-based frequency priority. Optionally, the slice information includes slice information of each slice supported by the terminal device. The first frequency priority may be an original priority of the first frequency as indicated by the network device, and be unrelated to the slice information.

**(2) In case the** slice-based frequency priority **is not acquired, the frequency priority of the first frequency may be determined according to whether the first frequency supports the target slice.**
a. In case the first frequency supports the target slice, the terminal device may determine the frequency priority of the first frequency to be the highest frequency priority, or that the frequency priority of the first frequency is higher than a frequency priority of a frequency other than the first frequency.
b. In case the first frequency does not support the target slice, the terminal device may determine the frequency priority of the first frequency to be the lowest frequency priority, or that the frequency priority of the first frequency is lower than a frequency priority of a frequency other than the first frequency.
c. The terminal device may determine the frequency priority of the first frequency to be the first priority in case the first frequency supports the target slice. Alternatively, the terminal device may determine the frequency priority of the first frequency to be the second priority in case the first frequency does not support the target slice.

The second priority may not be higher than the first priority. Alternatively, the first priority may be higher than the second priority.

d. The terminal device may determine the frequency priority of the first frequency based on the number of target slices supported by the first frequency.

Optionally, the frequency priority of the first frequency determined by the terminal is positively correlated with the number of target slices supported by the first frequency. Alternatively, in case the number of target slices supported by the first frequency reaches a threshold, or is the maximal of numbers of target slices supported by respective frequencies, the terminal may determine the frequency priority of the first frequency to be a highest frequency priority.

Optionally, the target slice includes at least one of:
any slice;
a user equipment (UE) desired slice;
an intersection of the UE desired slice and a slice supported by a network (such as a cell);
a slice in a first correspondence; or
a slice in a second correspondence.

Optionally, the UE desired slice includes at least one of:
a configured slice;
an allowed slice;
a requested slice;
a target slice;
1 or N slices in a slice list;
1 or N slices of top slice priorities in the slice list;
first 1 or N slices in a first correspondence; or
first 1 or N slices in a second correspondence.

**(3) In case the** slice-based frequency priority **is acquired, the frequency priority of the first frequency may be determined according to the** slice-based frequency priority.

Illustratively, in case the slice-based frequency priority is acquired, the terminal device may determine the frequency priority of the first frequency according to frequency priorities corresponding to the target slice supported by the first frequency. Optionally, in this case, the terminal device may determine the frequency priority of the first frequency to be a highest frequency priority, a lowest frequency priority, any frequency priority, or an average frequency priority, of the frequency priorities corresponding to the target slice supported by the first frequency.

**The frequency priority of the first frequency may be determined based on slice information of a UE desired slice. Alternatively, the frequency priority of the first frequency may be determined based on slice information of a slice acquired by combining a UE desired slice and a slice supported by the network.**

The terminal device may determine a list of slices desired by the UE (the terminal device) based on the first slice information. Optionally, a UE desired slice includes at least one or part of a configured slice (determined according to configured NSSAI), an allowed slice (determined according to allowed NSSAI), a requested slice (determined according to request NSSAI), or a target slice (determined according to target NSSAI).

Optionally, in case the slice priority of the UE desired slice is acquired based on the first slice information, the terminal device determines, in the above mode, the frequency priority of the first frequency. Alternatively, the terminal device may determine, in the above mode, the frequency priority of the first frequency even if the terminal device fails to acquire the slice priority of the UE desired slice. Optionally, the terminal device may further rank and filter UE desired slices according to slice priorities in the slice information.

Optionally, the slice acquired by combining the UE desired slice and the slice supported by the network refers to a slice in an intersection of the slice desired by the terminal device and the slice supported by the network.

Illustratively, having determined the UE desired slice or the slice acquired by combining the UE desired slice and the slice supported by the network, the terminal device determines the frequency priority of the first frequency based on slice information of the determined slice. For example, the terminal device determines the frequency priority of the first frequency according to whether first slice information of the determined slice includes the slice-based frequency priority.

**In case the slice priority is not acquired, the frequency priority of the first frequency may be determined based on slice information of a slice acquired by combining a UE desired slice and a slice supported by the network.**

The terminal device may determine a list of slices desired by the UE according to the first slice information. Optionally, a UE desired slice includes at least one of a configured slice, an allowed slice, a requested slice, or a target slice.

Optionally, the slice acquired by combining the UE desired slice and the slice supported by the network refers to a slice in an intersection of the slice desired by the terminal device and the slice supported by the network.

Illustratively, having determined the slice acquired by combining the UE desired slice and the slice supported by the network, the terminal device determines the frequency priority of the first frequency based on slice information of the determined slice. For example, the terminal device determines the frequency priority of the first frequency according to whether first slice information of the determined slice includes the slice-based frequency priority.

For example, the terminal device determines an intersection of a desired slice and a slice supported by a network (supported by the first frequency) to determine an intersection slice, and determines the frequency priority of the first frequency according to first slice information of the intersection slice. Optionally, the terminal device determines the frequency priority of the first frequency to be a highest frequency priority, a lowest frequency priority, any frequency priority, or an average frequency priority, of frequency priorities corresponding to the intersection slice. Alternatively, the terminal device may determine the frequency priority of a frequency according to the number of intersection slices supported by each frequency. For example, the first frequency supports the greatest number of intersection slices. Then, the frequency priority of the first frequency may be the highest. If the first frequency supports the least number of intersection slices, the frequency priority of the first frequency may be the lowest.

At S404, at least one of cell selection, cell measurement, cell search, or cell reselection is performed according to the frequency priority.

Having determined the frequency priority according to the first slice information, the terminal device may perform cell measurement and cell search, or cell selection and cell reselection, according to the frequency priority determined based on the slice information or the first frequency priority.

### Cell measurement or cell search

**(1) Cell measurement or cell search may be performed based on the first measurement rule using a frequency priority determined based on the slice information.**

According to the frequency priority determined based on the slice information, the terminal device may perform cell measurement or cell search on a first frequency or a cell corresponding to the first frequency according to the first measurement rule. For example, if a frequency priority of a neighbouring cell is higher than that of the current cell, then the terminal device may perform measurement on the neighbouring cell continuously. If the frequency priority corresponding to the neighbouring cell is not higher than the frequency priority corresponding to the current cell, the terminal device may start measurement on the neighbouring cell when channel quality of the current cell is lower than a threshold.

**(2) Cell measurement or cell search may be performed according to whether a first frequency or a cell corresponding to the first frequency supports a target slice.**

In case the first frequency supports a target slice (including any slice or a UE desired slice), the terminal device may conditionally or unconditionally perform cell measurement or cell search on the first frequency or the cell corresponding to the first frequency, or continuously perform cell measurement or cell search on the first frequency or the cell corresponding to the first frequency.

Optionally, the condition includes that the terminal device calculates the S value, and determines whether an initiation condition for measuring signal quality of a neighbouring cell is met. By continuously performing cell measurement or cell search on the first frequency or the cell corresponding to the first frequency, it may mean that the terminal device continuously performs cell measurement or cell search on the first frequency or the cell corresponding to the first frequency, ignoring any condition.

Illustratively, in case the first frequency or the cell corresponding to the first frequency supports a slice or a frequency corresponding to a UE desired slice, the terminal device continuously performs measurement on the first frequency or the cell corresponding to the first frequency. In case the first frequency or the cell corresponding to the first frequency does not support a slice or a UE desired slice, the terminal device may perform measurement on the first frequency or the cell corresponding to the first frequency when the first frequency or the cell corresponding to the first frequency meets a condition (such as a nonintra-frequency (inter-frequency) measurement condition in the first measurement rule).

Optionally, the terminal device performs cell measurement or cell search using a frequency priority determined based on slice information, or a first frequency priority.

### Cell reselection or cell selection

**(1) The first cell or a target frequency may be skipped, or a reselection priority of reselection to the first cell may be lowered, or the frequency priority of the target frequency may be lowered, in case the first cell does not support the target slice, or the first cell supports the target slice but a cell identity of the first cell differs from a target cell identity.**

The first cell is a candidate cell. The candidate cell may be a candidate target for cell reselection. The target frequency may be a frequency corresponding to a candidate cell. Optionally, the first cell is one of a suitable cell, a cell of a best measurement result, or a highest ranked cell in a reselection list. The first cell may be a cell acquired by performing measurement on the target frequency according to a target frequency priority. The target cell identity may be configured by the network to correspond to the target frequency priority, the target slice, and the target frequency. The terminal device may acquire the information from the slice information.

Optionally, the target slice includes a UE desired slice, such as a slice of the highest priority determined based on slice information, or all UE desired slices, or at least N UE desired slices.

By skipping a target frequency, it may mean that the target frequency is not taken as a target of reselection. By skipping the first cell, it may mean that the first cell is not taken as a target of reselection.

Illustratively, the target slice is the slice 1 (the slice 1 is of a top/highest slice priority in the slice list). The terminal device may determine a respective frequency priority corresponding to each frequency/cell according to a frequency priority and a frequency corresponding to the slice 1 (further including a correspondence with PCI). The terminal device may skip a cell found by measurement when performing reselection or reselection measurement according to the frequency priority, if the terminal device finds out that the cell does not support the slice 1. Alternatively, the terminal device may skip a cell found by measurement when performing reselection or reselection measurement according to the frequency priority, if the terminal device finds out that although the cell supports the slice 1, the frequency priority used differs from a frequency priority corresponding to the slice 1 indicated for the PCI by the network.

The terminal device may camp on the current cell, or perform reselection according to the first reselection rule, in case the terminal device skips the cell/the frequency, and there is no subsequent cell/frequency.

When the terminal device sets a low priority for a cell/frequency, the terminal device may determine, according to a legacy reselection rule, a cell on which to camp. That is, the terminal device may determine a reselected cell according to the priority of a frequency and quality of a channel (even if a final cell selected does not support the target slice).

**(2) The terminal device may perform reselection to camp on the first cell in case the first cell supports the target slice, or the first cell supports the target slice and a cell identity of the first cell is identical to a target cell identity.**

To sum up, with the method according to the embodiment, at least one of cell selection, cell measurement, cell search, or cell reselection is performed using slice information, implementing more reasonable cell selection, cell measurement, cell search, and cell reselection for different slice information, increasing the possibility for the UE to camp on a target cell capable of providing a desired slice service. A basic mode of performing at least one of cell selection, cell measurement, cell search, or cell reselection based on slice information is provided.

### Mode 2

Mode 2 illustrates how the frequency priority of the frequency is determined, and how cell measurement, cell search, cell reselection, and cell selection is implemented, in case the slice information includes a correspondence between a slice and a frequency, and includes a slice priority, but does not include a slice-based frequency priority.

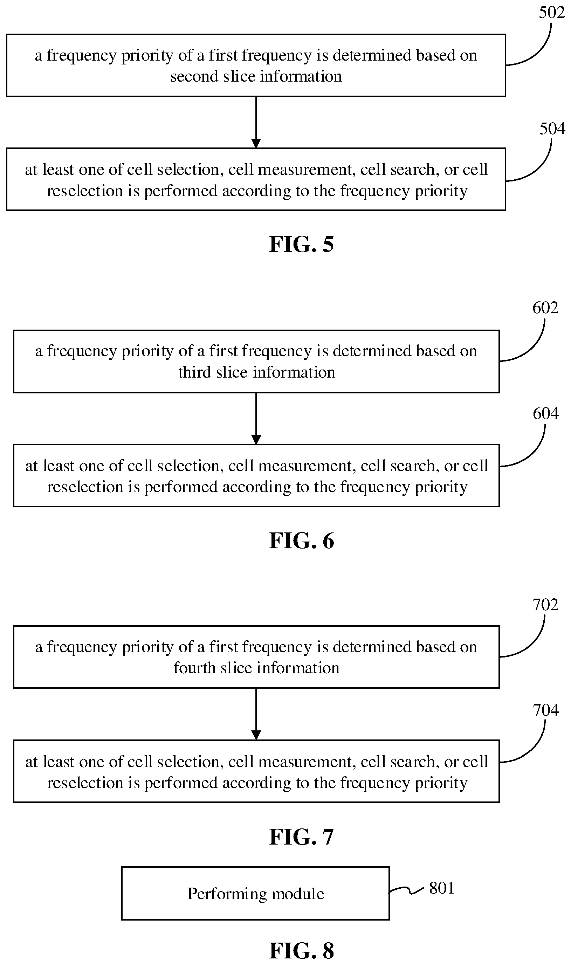

FIG. 5 is a flowchart of a method for using slice information according to an embodiment of the disclosure. FIG. 5 is illustrated by applying the method to a terminal device in the communication system as shown in FIG. 2. The method includes operations as follows.

At S502, a frequency priority of a first frequency is determined based on second slice information.

The second slice information may be indicated by a network device. The network device may be an access network device 20 in FIG. 2. For example, the network device indicates the slice information to the terminal device through a system message. The system message may include at least one of a system information block 2 (SIB2), a system information block 3 (SIB3), a system information block 4 (SIB4), or another (new) system information block (SIB). In addition, the network device further indicates the slice information through a dedicated RRC message. For example, the dedicated RRC message may be an RRC release message. The first frequency may be any frequency for which a frequency priority is to be determined.

The second slice information may include a first correspondence between a frequency and a slice indicated by the network device. The second slice information may further include a list of slices desired by the terminal device, and slice priorities in case there are multiple desired slices. The second slice information does not include a slice-based frequency priority.

Optionally, the frequency priority of the first frequency is determined according to the second slice information in at least one mode as follows.
**(1) The frequency priority of the first frequency is determined to be the first frequency priority in case the** slice-based frequency priority **is not acquired.**

The first frequency may be any frequency for which a frequency priority is to be determined. Therefore, the terminal device may determine a frequency priority of each supported frequency to be a first frequency priority.

**(2) In case the** slice-based frequency priority is **not acquired, the frequency priority of the first frequency may be determined according to whether the first frequency supports the target slice.**

Optionally, the target slice includes at least one of:
any slice;
a user equipment (UE) desired slice (such as a slice of the highest slice priority, or N slices of top slice priorities); or
a slice in a first correspondence between a slice and a frequency.

Optionally, the UE desired slice includes at least one of:
a configured slice;
an allowed slice;
a requested slice;
a target slice;
1 or N slices in a slice list;
1 or N slices of top slice priorities in the slice list; or
first 1 or N slices in the first correspondence.

Illustratively, the terminal device determines the frequency priority of the first frequency according to whether the first frequency supports the target slice, in at least one mode as follows.
a. In case the first frequency supports the target slice, the terminal device may determine the frequency priority of the first frequency to be a highest frequency priority, or determine that the frequency priority of the first frequency is higher than a frequency priority of a frequency other than the first frequency.
b. In case the first frequency does not support the target slice, the terminal device may determine the frequency priority of the first frequency to be a lowest frequency priority, or determine that the frequency priority of the first frequency is lower than the frequency priority of the frequency other than the first frequency.
c. The terminal device may determine the frequency priority of the first frequency to be the first priority in case the first frequency supports the target slice. Alternatively, the terminal device may determine the frequency priority of the first frequency to be the second priority in case the first frequency does not support the target slice.

The second priority may not be higher than the first priority. Alternatively, the first priority may be higher than the second priority.

d. The terminal device may determine the frequency priority of the first frequency based on the number of target slices supported by the first frequency.

Optionally, the frequency priority of the first frequency determined by the terminal is positively correlated with the number of target slices supported by the first frequency. Alternatively, in case the number of target slices supported by the first frequency reaches a threshold, or is the maximal of numbers of target slices supported by respective frequencies, the terminal may determine the frequency priority of the first frequency to be a highest frequency priority.

Note that in case the first frequency does not support the target slice, the terminal device may further determine the frequency priority of the first frequency to be the first frequency priority.

At S504, at least one of cell selection, cell measurement, cell search, or cell reselection is performed according to the frequency priority.

### Cell measurement or cell search

The terminal device may perform cell measurement or cell search using a frequency priority determined hereinbefore based on the slice information, or a first frequency priority. In addition, a measurement rule used may be a first measurement rule or a second measurement rule.

### Cell reselection or cell selection

**(1) In case the first cell supports the target slice, a reselection priority of reselection to the first cell may be raised to a first priority, or a frequency priority of the target frequency may be raised to a second priority. Cell selection or cell reselection may be performed according to the first reselection rule based on the adjusted frequency priority.**

A candidate cell may be a candicate target cell for cell reselection. A target frequency may be a frequency corresponding to the candidate cell. Optionally, the candidate cell includes a first cell.

Note that a frequency priority adjusted by the terminal device may be the first frequency priority or the frequency priority determined based on the slice information. Having adjusted the frequency priority, the terminal device may perform cell selection or cell reselection according to the first reselection rule.

Optionally, in case the first measurement rule is used, the terminal device adjusts the frequency priority in this way, and then makes a reselection decision before performing reselection.

**(2) In case the first cell does not support the target slice, the first cell may be skipped, or the target frequency may be skipped, or the reselection priority of reselection to the first cell may be lowered to a third priority, or the frequency priority of the target frequency may be lowered to a fourth priority. Cell selection or cell reselection may be performed according to the first reselection rule based on the adjusted frequency priority.**

The first priority may be higher than the third priority. The second priority may be higher than the fourth priority. By skipping a target frequency, it may mean that the target frequency is not taken as a target of reselection. By skipping the first cell, it may mean that the first cell is not taken as a target of reselection. Optionally, the first cell is a suitable cell, a cell of a best measurement result, or a highest ranked cell in a reselection list.

Illustratively, the second priority/the first priority acquired by the terminal device by performing the adjustment is higher than the reselection priority of the first cell/the target frequency before the adjustment, and the third priority/the fourth priority is lower than the reselection priority of the first cell/the target frequency before the adjustment. Alternatively, the second priority/the first priority may be higher than the reselection priority of a cell other than the first cell/a frequency other than the target frequency, and the third priority/the fourth priority may be lower than the reselection priority of the cell other than the first cell/the frequency other than the target frequency. A reselection priority before the adjustment may be determined based on the first frequency priority.

Optionally, in case the first measurement rule is used, the terminal device adjusts the frequency priority in this way, and then makes a reselection decision before performing reselection.

Optionally, in case the second slice information further includes a correspondence between a slice and a frequency at cell granularity, the second slice information includes a second correspondence among the slice, the frequency, and a cell identity, and the target slice includes a slice in the second correspondence. The terminal device may further perform the adjustment in at least one mode as follows.
a. The first cell or the target frequency may be skipped in case the first cell does not support the target slice, and different frequency priorities of the target frequency are configured for different cell identities.
b. The terminal device may lower the reselection priority of reselection to the first cell to the third priority or lower the frequency priority of the target frequency to the fourth priority in case the first cell does not support the target slice, and identical frequency priorities of the target frequency are configured for different cell identities.

Optionally, the terminal device may further set the frequency priority of the target frequency to be the frequency priority corresponding to another slice if the first cell does not support the target slice; or if the first cell does not support the target slice, and identical frequency priorities of the target frequency are configured for different cell identities.

Illustratively, if the current cell (the first cell) does not support a slice with the highest priority of slices supported by both the network and the UE (that is, the current cell does not support a slice with the highest priority in the intersection of slices supported by the UE and slices supported by the network), or does not support a slice with the highest priority of UE desired slices, the terminal device may determine a priority of a cell/a frequency corresponding to the cell to be a frequency priority of a slice having the next priority of the slices supported by both the network and the UE, or a frequency priority of a slice having the next priority of the UE desired slices.

**(3) Cell selection or cell reselection may be performed according to the first reselection rule.**

Optionally, the terminal device performs cell selection or cell reselection according to the first reselection rule using a frequency priority determined based on slice information, or a first frequency priority.

To sum up, with the method according to the embodiment, at least one of cell selection, cell measurement, cell search, or cell reselection is performed using slice information not including a slice-based frequency priority, implementing more reasonable cell selection, cell measurement, cell search, and cell reselection, increasing the possibility for the UE to camp on a target cell capable of providing a desired slice service. A mode of performing at least one of cell selection, cell measurement, cell search, or cell reselection in case the slice information does not include the slice-based frequency priority is provided.

### Mode 3

Mode 3 illustrates how the frequency priority of the frequency is determined, and how cell measurement, cell search, cell reselection, and cell selection is implemented, in case the slice information includes a third correspondence among the slice, the frequency, and a slice-based frequency priority, but does not include a slice priority.

FIG. 6 is a flowchart of a method for using slice information according to an embodiment of the disclosure. FIG. 6 is illustrated by applying the method to a terminal device in the communication system as shown in FIG. 2. The method includes operations as follows.

At S602, a frequency priority of a first frequency is determined based on third slice information.

The third slice information may be indicated by a network device. The network device may be an access network device 20 in FIG. 2. For example, the network device indicates the slice information to the terminal device through a system message. The system message may include at least one of a system information block 2 (SIB2), a system information block 3 (SIB3), a system information block 4 (SIB4), or another (new) system information block (SIB). In addition, the network device further indicates the slice information through a dedicated RRC message. For example, the dedicated RRC message may be an RRC release message. The first frequency may be any frequency for which a frequency priority is to be determined.

The third slice information may include the third correspondence among the frequency, the slice-based frequency priority, and the slice indicated by the network device. The third slice information does not include a slice priority.

Optionally, the frequency priority of the first frequency is determined based on the third slice information in at least one mode as follows.
**(1) The frequency priority of the first frequency may be determined based on the number of target slices supported by the first frequency.**

The target slice may include at least one of a UE desired slice or an intersection of the UE desired slice and a slice supported by a network (such as the first frequency). A UE desired slice may include at least one of a configured slice, an allowed slice, a requested slice, or a target slice.

Optionally, the frequency priority of the first frequency determined by the terminal device is positively correlated with the number of target slices supported by the first frequency.

Illustratively, each of the frequency 1 and the frequency 2 supports 2 slices, and the frequency 3 supports 1 slice. Then, each of the frequency 1 and the frequency 2 may have a frequency priority higher than that of the frequency 3. If it is determined in this way that there are multiple cells/frequencies corresponding to identical frequency priorities, the frequencies may be deemed to have the same frequency priority. Alternatively, the frequency priority of a frequency may be adjusted to be the highest frequency priority corresponding to any target slice supported by the frequency. For example, the frequency 1 supports the slice 1 (corresponding to the frequency priority 2) and the slice 2 (corresponding to the frequency priority 4), and the frequency 2 supports the slice 3 (corresponding to the frequency priority 5) and the slice 4 (corresponding to the frequency priority 3). Then, the frequency priority of the frequency 1 determined by the terminal device may be adjusted to be 4. The frequency priority of the frequency 2 may be adjusted to be 5.

Optionally, in case the number of target slices supported by the first frequency reaches a threshold, or is the maximal of numbers of target slices supported by respective frequencies, the terminal determines the frequency priority of the first frequency to be a highest frequency priority.

Illustratively, the threshold is 2; the frequency 1 and the frequency 2 each supports 2 slices, and the frequency 3 supports 1 slice. Then, each of the frequency 1 and the frequency 2 may have a frequency priority higher than that of the frequency 3. If it is determined in this way that there are multiple cells/frequencies corresponding to identical frequency priorities, the frequencies may be deemed to have the same frequency priority. Alternatively, the frequency priority of a frequency may be adjusted to be the highest frequency priority corresponding to any target slice supported by the frequency. For example, the frequency 1 supports the slice 1 (corresponding to the frequency priority 2) and the slice 2 (corresponding to the frequency priority 4), and the frequency 2 supports the slice 3 (corresponding to the frequency priority 5) and the slice 4 (corresponding to the frequency priority 3). Then, the frequency priority of the frequency 1 determined by the terminal device may be adjusted to be 4. The frequency priority of the frequency 2 may be adjusted to be 5.

**(2) A frequency priority of the first frequency may be determined according to a frequency priority corresponding to a target slice supported by the first frequency.**

Optionally, the target slice includes any slice. The terminal device may determine the frequency priority of the first frequency to be a highest frequency priority, a lowest frequency priority, any frequency priority, or an average frequency priority, of frequency priorities corresponding to target slices supported by the first frequency.

Illustratively, the target slices supported by the first frequency include the slice 1 (frequency priority 1), the slice 2 (frequency priority 3), and a slice 3 (frequency priority 5). According to the frequency priority corresponding to the target slice supported by the first frequency, the terminal device may determine the frequency priority of the first frequency to be 5 (the highest frequency priority), 1 (the lowest frequency priority), 3 (the any frequency priority, such as the frequency priority of the slice 2), or 3 (the average frequency priority).

Illustratively, in case the frequency priority of the first frequency is determined to be a highest frequency priority of the frequency priorities corresponding to the target slices supported by the first frequency, the frequency 1 supports the slice 1 (corresponding to the frequency priority 2) and the slice 2 (corresponding to the frequency priority 4), and the frequency 2 supports the slice 3 (corresponding to the frequency priority 5) and the slice 4 (corresponding to the frequency priority 3). Then, the frequency priority of the frequency 1 determined by the terminal device may be 4. The frequency priority of the frequency 2 may be 5.

At S604, at least one of cell selection, cell measurement, cell search, or cell reselection is performed according to the frequency priority.

### Cell measurement or cell search

The terminal device may perform cell measurement or cell search using a frequency priority determined hereinbefore based on the slice information, or a first frequency priority. In addition, a measurement rule used may be a first measurement rule or a second measurement rule.

### Cell reselection or cell selection

**(1) Cell selection or cell reselection may be performed according to the first reselection rule.**

Optionally, the terminal device performs cell selection or cell reselection according to the first reselection rule using a frequency priority determined based on slice information.

Optionally, during performing cell selection or cell reselection according to the first reselection rule, the terminal device may further adjust the frequency priority determined based on the slice information.

Illustratively, the terminal device skips the first cell or the target frequency, lowers the reselection priority of reselection to the first cell to the third priority, or lowers the frequency priority of the target frequency to the fourth priority, in case the first cell does not support the target slice. Then, the terminal device may perform cell selection or cell reselection according to the first reselection rule based on the adjusted frequency priority.

The first cell is a candidate cell. A candidate cell may be a cell serving as a candidate target for cell reselection. A target frequency may be a frequency corresponding to the candidate cell.

**(2) If a first frequency priority is used in cell measurement, in reselection, the terminal device may skip the first cell or the target frequency, lower the reselection priority of reselection to the first cell to the third priority, or lower the frequency priority of the target frequency to the fourth priority, in case the first cell does not support the target slice. Then, the terminal device may perform cell selection or cell reselection according to the first reselection rule based on the adjusted frequency priority.**

Optionally, a frequency priority of a frequency determined based on slice information is used in the cell reselection.

Optionally, in case the third slice information further includes a correspondence between a slice and a frequency at cell granularity, the third slice information includes a fourth correspondence among the slice, the frequency, the slice-based frequency priority, and a cell identity, and the target slice includes a slice in the fourth correspondence. The terminal device may further perform the adjustment in at least one mode as follows.
a. The first cell or the target frequency may be skipped in case the first cell does not support the target slice, and different frequency priorities of the target frequency are configured for different cell identities.
b. The terminal device may lower the reselection priority of reselection to the first cell to the third priority or lower the frequency priority of the target frequency to the fourth priority in case the first cell does not support the target slice, and identical frequency priorities of the target frequency are configured for different cell identities.

Optionally, the terminal device may further set the frequency priority of the target frequency to be the frequency priority corresponding to another slice if the first cell does not support the target slice; or if the first cell does not support the target slice, and identical frequency priorities of the target frequency are configured for different cell identities.

Optionally, if the current cell (the first cell) does not support a slice with the highest priority of slices supported by both the network and the UE, or does not support a slice with the highest priority of UE desired slices, the terminal device may determine a priority of a cell/a frequency corresponding to the cell to be the frequency priority of a slice having the next priority of the slices supported by both the network and the UE, or a frequency priority of a slice having the next priority of the UE desired slices.

To sum up, with the method according to the embodiment, at least one of cell selection, cell measurement, cell search, or cell reselection is performed using slice information not including a slice priority, implementing more reasonable cell selection, cell measurement, cell search, and cell reselection, increasing the possibility for the UE to camp on a target cell capable of providing a desired slice service. A mode of performing at least one of cell selection, cell measurement, cell search, or cell reselection in case the slice information does not include the slice priority is provided.

### Mode 4

Mode 4 illustrates how the frequency priority of the frequency is determined, and how cell measurement, cell search, cell reselection, and cell selection is implemented, in case the slice information includes a first correspondence between a slice and a frequency, but does not include a slice-based frequency priority and does not include a slice priority.

FIG. 7 is a flowchart of a method for using slice information according to an embodiment of the disclosure. FIG. 7 is illustrated by applying the method to a terminal device in the communication system as shown in FIG. 2. The method includes operations as follows.

At S702, a frequency priority of a first frequency is determined based on fourth slice information.

The fourth slice information may be indicated by a network device. The network device may be an access network device 20 in FIG. 2. For example, the network device indicates the slice information to the terminal device through a system message. The system message may include at least one of a system information block 2 (SIB2), a system information block 3 (SIB3), a system information block 4 (SIB4), or another (new) system information block (SIB). In addition, the network device further indicates the slice information through a dedicated RRC message. For example, the dedicated RRC message may be an RRC release message. The first frequency may be any frequency for which a frequency priority is to be determined.

The fourth slice information may include the first correspondence between the slice and the frequency indicated by the network device. The fourth slice information does not include a slice-based frequency priority and does not include a slice priority.

Optionally, the frequency priority of the first frequency is determined based on the fourth slice information in at least one mode as follows.
**(1) The frequency priority of the first frequency is determined to be the first frequency priority in case the** slice-based frequency priority **is not acquired.**

The first frequency may be any frequency for which a frequency priority is to be determined. Therefore, the terminal device may determine a frequency priority of each supported frequency to be a first frequency priority.

**(2) In case the** slice-based frequency priority **is not acquired, the frequency priority of the first frequency may be determined according to whether the first frequency supports the target slice.**

Optionally, the target slice includes at least one of:
any slice;
a user equipment (UE) desired slice (such as a slice of the highest priority of UE desired slices); or
a slice in a first correspondence between a slice and a frequency.

Optionally, the UE desired slice includes at least one of:
a configured slice;
an allowed slice;
a requested slice;
a target slice;
1 or N slices in a slice list;
1 or N slices of top slice priorities in the slice list; or
first 1 or N slices in the first correspondence.

Illustratively, the terminal device determines the frequency priority of the first frequency according to whether the first frequency supports the target slice, in at least one mode as follows.
a. In case the first frequency supports the target slice, the terminal device may determine the frequency priority of the first frequency to be a highest frequency priority, or determine that the frequency priority of the first frequency is higher than a frequency priority of a frequency other than the first frequency.
b. In case the first frequency does not support the target slice, the terminal device may determine the frequency priority of the first frequency to be a lowest frequency priority, or determine that the frequency priority of the first frequency is lower than the frequency priority of the frequency other than the first frequency.
c. The terminal device may determine the frequency priority of the first frequency to be the first priority in case the first frequency supports the target slice. Alternatively, the terminal device may determine the frequency priority of the first frequency to be the second priority in case the first frequency does not support the target slice.

Optionally, the second priority is not higher than the first priority. Alternatively, the first priority may be higher than the second priority.

Note that in case the first frequency does not support the target slice, the terminal device may further determine the frequency priority of the first frequency to be the first frequency priority.

**(3) The frequency priority of the first frequency may be determined based on the number of target slices supported by the first frequency.**

Optionally, the frequency priority of the first frequency determined by the terminal device is positively correlated with the number of target slices supported by the first frequency.

Illustratively, each of the frequency 1 and the frequency 2 supports 2 slices, and the frequency 3 supports 1 slice. Then, each of the frequency 1 and the frequency 2 may have a frequency priority higher than that of the frequency 3. If it is determined in this way that there are multiple cells/frequencies corresponding to identical frequency priorities, the frequencies may be deemed to have the same frequency priority. Alternatively, the frequency priority of a frequency may be adjusted to be the highest frequency priority corresponding to any target slice supported by the frequency. For example, the frequency 1 supports the slice 1 (corresponding to the frequency priority 2) and the slice 2 (corresponding to the frequency priority 4), and the frequency 2 supports the slice 3 (corresponding to the frequency priority 5) and the slice 4 (corresponding to the frequency priority 3). Then, the frequency priority of the frequency 1 determined by the terminal device may be adjusted to be 4. The frequency priority of the frequency 2 may be adjusted to be 5.

Optionally, in case the number of target slices supported by the first frequency reaches a threshold, or is the maximal of numbers of target slices supported by respective frequencies, the terminal determines the frequency priority of the first frequency to be a highest frequency priority.

Illustratively, the threshold is 2; each of the frequency 1 and the frequency 2 supports 2 slices, and the frequency 3 supports 1 slice. Then, each of the frequency 1 and the frequency 2 may have a frequency priority higher than that of the frequency 3. If it is determined in this way that there are multiple cells/frequencies corresponding to identical frequency priorities, the frequencies may be deemed to have the same frequency priority. Alternatively, the frequency priority of a frequency may be adjusted to be the highest frequency priority corresponding to any target slice supported by the frequency. For example, the frequency 1 supports the slice 1 (corresponding to the frequency priority 2) and the slice 2 (corresponding to the frequency priority 4), and the frequency 2 supports the slice 3 (corresponding to the frequency priority 5) and the slice 4 (corresponding to the frequency priority 3). Then, the frequency priority of the frequency 1 determined by the terminal device may be adjusted to be 4. The frequency priority of the frequency 2 may be adjusted to be 5.

At S704, at least one of cell selection, cell measurement, cell search, or cell reselection is performed according to the frequency priority.

### Cell measurement or cell search

The terminal device may perform cell measurement or cell search using a frequency priority determined hereinbefore based on the slice information, or a first frequency priority. In addition, a measurement rule used may be a first measurement rule or a second measurement rule.

### Cell reselection or cell selection

**(1) Cell selection or cell reselection may be performed according to the first reselection rule.**

Optionally, the terminal device performs cell selection or cell reselection according to the first reselection rule using a frequency priority determined based on slice information.

Optionally, during performing cell selection or cell reselection according to the first reselection rule, the terminal device may further adjust the frequency priority determined based on the slice information.

Illustratively, in case the first cell does not support the target slice, the terminal device skips the first cell or the target frequency, and performs cell selection or cell reselection according to the first reselection rule.

The first cell is a candidate cell. The candidate cell may be a cell serving as a candidate target for cell reselection. The target frequency may be a frequency corresponding to the candidate cell.

**(2) The first cell or the target frequency may be skipped, the reselection priority of reselection to the first cell may be lowered to the third priority, or the frequency priority of the target frequency may be lowered to the fourth priority, in case the first cell does not support the target slice. Cell selection or cell reselection may be performed according to the first reselection rule based on the adjusted frequency priority.**

Optionally, a frequency priority of a frequency determined based on slice information, or a first frequency priority, is used in the cell reselection. The terminal device may adjust the frequency priority determined based on the slice information, or adjust the first frequency priority.

Optionally, in case a first frequency priority is used in cell measurement, the terminal device may adjust the first frequency priority in this way before performing cell reselection.

Optionally, in case the fourth slice information further includes a correspondence between a slice and a frequency at cell granularity, the fourth slice information includes a second correspondence among the slice, the frequency, and a cell identity, and the target slice includes a slice in the second correspondence. The terminal device may further perform the adjustment in at least one mode as follows.
a. The first cell or the target frequency may be skipped in case the first cell does not support the target slice, and different frequency priorities of the target frequency are configured for different cell identities.
b. The terminal device may lower the reselection priority of reselection to the first cell to the third priority or lower the frequency priority of the target frequency to the fourth priority in case the first cell does not support the target slice, and identical frequency priorities of the target frequency are configured for different cell identities.

Optionally, the terminal device may further set the frequency priority of the target frequency to be the frequency priority corresponding to another slice if the first cell does not support the target slice; or if the first cell does not support the target slice, and identical frequency priorities of the target frequency are configured for different cell identities.

Optionally, if the current cell (the first cell) does not support a slice with the highest priority of slices supported by both the network and the UE, or does not support a slice with the highest priority of UE desired slices, the terminal device may determine a priority of a cell/a frequency corresponding to the cell to be the frequency priority of a slice having the next priority of the slices supported by both the network and the UE, or a frequency priority of a slice having the next priority of the UE desired slices.

To sum up, with the method according to the embodiment, at least one of cell selection, cell measurement, cell search, or cell reselection is performed using slice information including just a first correspondence between a slice and a frequency, implementing more reasonable cell selection, cell measurement, cell search, and cell reselection, increasing the possibility for the UE to camp on a target cell capable of providing a desired slice service. A mode of performing at least one of cell selection, cell measurement, cell search, or cell reselection in case the slice information including just the first correspondence between the slice and the frequency is provided.

The embodiments may be implemented separately or in any combination as needed.

FIG. 8 is a block diagram of an apparatus for using slice information according to an embodiment of the disclosure. As shown in FIG. 8, the apparatus 80 includes a performing module.

The performing module 801 is configured to perform at least one of cell selection, cell measurement, cell search, or cell reselection based on slice information.

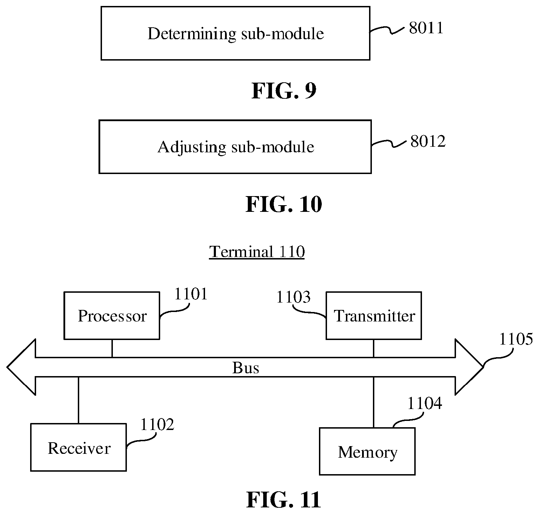

In an optional scheme, as shown in FIG. 9, the performing module 801 may include a determining sub-module.

The determining sub-module 8011 may be configured to determine a frequency priority of a frequency based on the slice information.

The performing module 801 may be configured to perform at least one of cell selection, cell measurement, cell search, or cell reselection according to the frequency priority.

In an optional scheme, the slice information includes at least one of:
a first correspondence between a slice and a frequency;
a second correspondence among the slice, the frequency, and a cell identity;
a third correspondence among the slice, the frequency, and a slice-based frequency priority;
a fourth correspondence among the slice, the frequency, the slice-based frequency priority, and the cell identity;
the slice-based frequency priority;
a slice list of user equipment (UE) desired slices; or
a slice priority.

In an optional scheme, the frequency includes a first frequency.

The determining sub-module 8011 may be configured to determine, based on the slice information, a frequency priority of the first frequency to be a first frequency priority.

The first frequency priority may be a frequency priority determined based on the frequency.

The determining sub-module 8011 is configured to, in response to that the slice-based frequency priority is not acquired, determine the frequency priority of the first frequency to be the first frequency priority.

In an optional scheme, the frequency includes a first frequency.

The determining sub-module 8011 may be configured to determine a frequency priority of the first frequency based on the slice information.

In an optional scheme, the determining sub-module 8011 is configured to, in response to that the slice-based frequency priority is acquired, determine the frequency priority of the first frequency based on the slice information.

In an optional scheme, the frequency includes a first frequency.

The determining sub-module 8011 may be configured to, based on the slice information, determine a frequency priority of the first frequency according to whether the first frequency supports a target slice.

In an optional scheme, the determining sub-module 8011 is configured to, in response to that the slice-based frequency priority is not acquired, or in response to that the slice-based frequency priority is acquired, determine the frequency priority of the first frequency according to whether the first frequency supports the target slice.

In an optional scheme, the determining sub-module 8011 is configured to, based on whether the first frequency supports the target slice, determine the frequency priority of the first frequency to be a highest frequency priority, or determine that the frequency priority of the first frequency is higher than a frequency priority of a frequency other than the first frequency.

Alternatively, the determining sub-module may be configured to, based on whether the first frequency supports the target slice, determine the frequency priority of the first frequency to be a lowest frequency priority, or determine that the frequency priority of the first frequency is lower than the frequency priority of the frequency other than the first frequency.

Alternatively, the determining sub-module may be configured to determine the frequency priority of the first frequency to be a first priority based on whether the first frequency supports the target slice, or determine the frequency priority of the first frequency to be a second priority based on whether the first frequency supports the target slice.

Alternatively, the determining sub-module may be configured to determine the frequency priority of the first frequency based on the number of target slices supported by the first frequency.

In an optional scheme, the determining sub-module 8011 is configured to, in response to that the first frequency supports the target slice, determine the frequency priority of the first frequency to be the highest frequency priority, or determine that the frequency priority of the first frequency is higher than the frequency priority of the frequency other than the first frequency.

In an optional scheme, the determining sub-module 8011 is configured to, in response to that the first frequency does not support the target slice, determine the frequency priority of the first frequency to be the lowest frequency priority, or determine that the frequency priority of the first frequency is lower than the frequency priority of the frequency other than the first frequency.

In an optional scheme, the determining sub-module 8011 is configured to determine the frequency priority of the first frequency to be the first priority in response to that the first frequency supports the target slice, or determine the frequency priority of the first frequency to be the second priority in response to that the first frequency does not support the target slice.

The second priority may not be higher than the first priority.

In an optional scheme, the determining sub-module 8011 is configured to determine the frequency priority of the first frequency to be the first priority in response to that the first frequency supports the target slice, or determine the frequency priority of the first frequency to be the second priority in response to that the first frequency does not support the target slice.

The first priority may be higher than the second priority.

In an optional scheme, the determining sub-module 8011 is configured to determine the frequency priority of the first frequency according to the number of target slices supported by the first frequency and a first frequency priority.

The first frequency priority may be the frequency priority determined based on the frequency.

In an optional scheme, the frequency includes a first frequency.

The determining sub-module 8011 may be configured to, based on the slice information, determine a frequency priority of the first frequency according to a frequency priority corresponding to a target slice supported by the first frequency.

Alternatively, the determining sub-module may be configured to, based on the slice information, determine the frequency priority of the first frequency according to the number of target slices supported by the first frequency, as well as frequency priorities corresponding to the target slices supported by the first frequency.

Alternatively, the determining sub-module may be configured to, based on the slice information, in response to that the first frequency does not support a target slice, determine the frequency priority of the first frequency according to a frequency priority corresponding to another slice supported by the first frequency.

In an optional scheme, the determining sub-module 8011 is configured to, in response to that the slice-based frequency priority is acquired, determine the frequency priority of the first frequency according to the frequency priority corresponding to the target slice supported by the first frequency.

In an optional scheme, the determining sub-module 8011 is configured to, in response to that the slice-based frequency priority is acquired, determine the frequency priority of the first frequency according to the number of target slices supported by the first frequency, as well as the frequency priorities corresponding to the target slices supported by the first frequency.

In an optional scheme, the determining sub-module 8011 is configured to, in response to that the slice-based frequency priority is acquired, and that the first frequency does not support the target slice, determine the frequency priority of the first frequency according to the frequency priority corresponding to the another slice supported by the first frequency.

In an optional scheme, the determining sub-module 8011 is configured to determine the frequency priority of the first frequency to be a highest frequency priority, a lowest frequency priority, any frequency priority, or an average frequency priority, of the frequency priorities corresponding to the target slices supported by the first frequency.

In an optional scheme, the frequency priority of the first frequency is positively correlated with the number of target slices supported by the first frequency.

Alternatively, in case the number of target slices supported by the first frequency reaches a threshold or is maximal, the frequency priority of the first frequency may be a highest frequency priority.

In an optional scheme, the performing module 801 is configured to perform cell measurement or cell search on a first frequency or a cell corresponding to the first frequency.

In an optional scheme, the performing module 801 is configured to, according to the frequency priority, perform cell measurement or cell search on the first frequency or the cell corresponding to the first frequency according to a first measurement rule.

The first measurement rule may be a measurement rule that does not use the slice information.

In an optional scheme, the performing module 801 is configured to, in response to that the first frequency supports a target slice, conditionally or unconditionally perform cell measurement or cell search on the first frequency or the cell corresponding to the first frequency, or continuously perform cell measurement or cell search on the first frequency or the cell corresponding to the first frequency.

In an optional scheme, the performing module 801 is configured to conditionally or unconditionally perform cell measurement or cell search on the first frequency or the cell corresponding to the first frequency, or continuously perform cell measurement or cell search on the first frequency or the cell corresponding to the first frequency, according to the frequency priority.

In an optional scheme, the performing module 801 is configured to perform cell measurement or cell search using a frequency priority of the frequency identical to, or different from, a frequency priority of the frequency used during cell reselection or cell selection.

In an optional scheme, the performing module 801 is configured to perform at least one of cell measurement, cell search, cell reselection, or cell selection using the frequency priority of the frequency determined based on the slice information.

In an optional scheme, the performing module 801 is configured to perform cell measurement or cell search using a first frequency priority of the frequency.

The first frequency priority may be the frequency priority determined based on the frequency.

The performing module may be configured to perform cell reselection or cell selection using the frequency priority of the frequency determined based on the slice information.

In an optional scheme, as shown in FIG. 10, the performing module 801 further includes an adjusting sub-module 8012.

The adjusting sub-module 8012 may be configured to adjust at least one of a candidate cell or a target frequency based on slice information corresponding to the candidate cell or whether the candidate cell supports a target slice.

**The** target frequency may be a frequency corresponding to the candidate cell.

**In** an optional scheme, the adjusting sub-module 8012 is configured to, before cell measurement, adjust at least one of the candidate cell or the target frequency based on the slice information corresponding to the candidate cell or whether the candidate cell supports the target slice.

Alternatively, the adjusting sub-module may be configured to, before making a reselection decision, adjust at least one of the candidate cell or the target frequency based on the slice information corresponding to the candidate cell or whether the candidate cell supports the target slice.

Alternatively, the adjusting sub-module may be configured to, before reselection from the candidate cell to a target cell, adjust at least one of the candidate cell or the target frequency based on the slice information corresponding to the candidate cell or whether the candidate cell supports the target slice.

In an optional scheme, the candidate cell includes a first cell.

The adjusting sub-module 8012 may be configured to, in response to that the first cell supports the target slice, raise a reselection priority of reselection to the first cell to a first priority, or raise a frequency priority of the target frequency to a second priority.

Alternatively, the adjusting sub-module may be configured to, in response to that the first cell does not support the target slice, skip the first cell, or skip the target frequency, or lower the reselection priority of reselection to the first cell to a third priority, or lower the frequency priority of the target frequency to a fourth priority.

The first priority may be higher than the third priority. The second priority may be higher than the fourth priority.

In an optional scheme, the first cell is a suitable cell, a cell of a best measurement result, or a highest ranked cell in a reselection list.

In an optional scheme, the adjusting sub-module 8012 is configured to skip the first cell or skip the target frequency in response to that the first cell does not support the target slice, and that different frequency priorities of the target frequency are configured for different cell identities.

In an optional scheme, the adjusting sub-module 8012 is configured to lower the reselection priority of reselection to the first cell to the third priority or lower the frequency priority of the target frequency to the fourth priority in response to that the first cell does not support the target slice, and that identical frequency priorities of the target frequency are configured for different cell identities.

In an optional scheme, the adjusting sub-module 8012 is configured to skip the first cell or skip the target frequency in response to that the first cell supports the target slice, that different frequency priorities of the target frequency are configured for different cell identities, and that a frequency priority corresponding to the first cell is not a frequency priority of the target frequency configured for the first cell.

In an optional scheme, the candidate cell includes a second cell.

The adjusting sub-module 8012 may be configured to skip the second cell, or skip the target frequency, or lower a reselection priority of reselection to the second cell to a third priority, or lower a frequency priority of the target frequency to a fourth priority, in response to determining through measurement that the second cell supports the target slice but a cell identity of the second cell differs from a target cell identity.

The second cell may be a cell acquired by performing measurement on the target frequency according to a target frequency priority. The target cell identity may be configured by the network to correspond to the target frequency priority, the target slice, and the target frequency.

In an optional scheme, a user equipment (UE) desired slice includes at least one of:
a configured slice;
an allowed slice;
a requested slice;
a target slice;
1 or N slices in a slice list;
1 or N slices of top slice priorities in the slice list;
first 1 or N slices in a first correspondence;
first 1 or N slices in a second correspondence;
first 1 or N slices in a third correspondence; or
first 1 or N slices in a fourth correspondence.

In an optional scheme, the target slice includes at least one of:
any slice;
a user equipment (UE) desired slice;
an intersection of UE desired slices and slices supported by a network;
a slice in a first correspondence;
a slice in a second correspondence;
a slice in a third correspondence; or
a slice in a fourth correspondence.

Division of the functional modules in implementing the function of the device according to the embodiment is merely illustrative. In application, the function may be allocated to be carried out by different functional modules as needed. That is, a content structure of the equipment may be divided into different functional modules for carrying out all or part of the function.

Refer to an illustrative method herein for elaboration of a way a module of the apparatus herein executes an operation, which is not repeated here.

FIG. 11 is a diagram of a structure of a terminal according to an illustrative embodiment of the disclosure. The terminal 110 may include a processor 1101, a receiver 1102, a transmitter 1103, a memory 1104, and a bus 1105.

The processor 1101 may include one or more processing cores. The processor 1101 may implement various functional applications and information processing by executing software programs and modules.

The receiver 1102 and the transmitter 1103 may be implemented as a communication component. The communication component may be a communication chip.

The memory 1104 is connected to the processor 1101 via the bus 1105.

The memory 1104 may be configured to store at least one instruction. The processor 1101 may be configured to execute the at least one instruction to implement the steps in a method embodiment described here.

Further, the memory 1104 may be implemented by any type of volatile or non-volatile storage device, or a combination of the any listed item. The volatile or non-volatile memory includes, but is not limited to, a magnetic disk or an optical disk, electrically erasable programmable read-only memory (EEPROM), erasable programmable read-only memory (EPROM), static random access memory (SRAM), read-only memory (ROM), magnetic memory, flash memory, programmable read-only memory (PROM), etc.

An illustrative embodiment further provides a computer-readable storage medium having stored therein at least an instruction, at least a program, a code set or an instruction set, which, when loaded and executed by a processor, implements a method for using slice information implemented by a terminal provided by a method embodiment here.

The embodiment here further provides a chip including a programmable logic circuit and/or program instructions. When run on a terminal, the chip may implement a method for using slice information implemented by a terminal.

The disclosure further provides a computer program product which, when executed on a terminal device, allow the terminal device to implement a method for using slice information here.

A person having ordinary skill in the art may realize that a function illustrated in embodiments of the disclosure may be implemented by hardware, software, firmware, or any combination of the any listed item in the one or more examples herein. When implemented by software, such a function may be stored in a computer-readable medium, or transmitted as one or more instructions or codes on the computer-readable medium. The computer-readable medium may include a computer storage medium, a communication medium, etc. The communication medium may include any medium that facilitates transmitting a computer program from one place to another. The storage medium may be any available medium accessible by a universal or application-specific computer.

## Claims

1. A method for using slice information performed by a terminal device, comprising:
performing (302) at least one of cell selection, cell measurement, cell search, or cell reselection based on slice information,
**characterized in that** performing (302) the at least one of cell selection, cell measurement, cell search, or cell reselection based on the slice information comprises:
for a frequency corresponding to different cells, when slice-based frequency priorities of the frequency for different slices supported by the different cells are different, determining a frequency priority of the frequency from the slice-based frequency priorities based on the slice information; and
performing (404, 504, 604, 704) the at least one of cell selection, cell measurement, cell search, or cell reselection according to the frequency priority,
wherein the slice information comprises at least one of:
a first correspondence between a slice and a frequency;
a second correspondence among the slice, the frequency, and a cell identity;
a third correspondence among the slice, the frequency, and the slice-based frequency priority;
a fourth correspondence among the slice, the frequency, the slice-based frequency priority, and the cell identity;
the slice-based frequency priority;
a slice list of user equipment, UE, desired slices; or
a slice priority, and
wherein the method further comprises:
in response to that a slice-based frequency priority for the frequency is not acquired, determining the frequency priority of the frequency to be a first frequency priority, wherein the first frequency priority is determined based on the frequency,
wherein the method further comprises:
based on the slice information, determining the frequency priority of the frequency according to whether the frequency supports a target slice, comprising:
in response to that the slice-based frequency priority is not acquired, or in response to that the slice-based frequency priority is acquired, determining the frequency priority of the frequency according to whether the frequency supports the target slice.

2. The method of claim 1, wherein determining the frequency priority of the frequency from the slice-based frequency priorities based on the slice information comprises:
in response to that the slice-based frequency priority is acquired, determining the frequency priority of the frequency based on the slice information.

3. The method of claim 1 or 2, wherein
a frequency priority of the frequency applied during cell measurement or cell search is identical to, or different from, a frequency priority of the frequency applied during cell reselection or cell selection,
wherein the method further comprises one of the following:
performing the at least one of cell measurement, cell search, cell reselection, or cell selection using the frequency priority of the frequency determined based on the slice information; or
performing cell measurement or cell search using the first frequency priority of the frequency, wherein the first frequency priority is determined based on the frequency; and performing cell reselection or cell selection using the frequency priority of the frequency determined based on the slice information; and
wherein the method further comprises:
adjusting at least one of a candidate cell or a target frequency based on slice information corresponding to the candidate cell or whether the candidate cell supports a target slice, wherein the target frequency is a frequency corresponding to the candidate cell.

4. The method of claim 3, wherein adjusting at least one of the candidate cell or the target frequency based on the slice information corresponding to the candidate cell or whether the candidate cell supports the target slice comprises:
before cell measurement, adjusting at least one of the candidate cell or the target frequency based on the slice information corresponding to the candidate cell or whether the candidate cell supports the target slice; or
before making a reselection decision, adjusting at least one of the candidate cell or the target frequency based on the slice information corresponding to the candidate cell or whether the candidate cell supports the target slice; or
before reselection from the candidate cell to a target cell, adjusting at least one of the candidate cell or the target frequency based on the slice information corresponding to the candidate cell or whether the candidate cell supports the target slice.

5. The method of claim 3, wherein the candidate cell comprises a first cell, and
wherein adjusting at least one of the candidate cell or the target frequency based on the slice information corresponding to the candidate cell or whether the candidate cell supports the target slice comprises:
in response to that the first cell supports the target slice, raising a reselection priority of reselection to the first cell to a first priority, or raising a frequency priority of the target frequency to a second priority; or
in response to that the first cell does not support the target slice, skipping the first cell, or skipping the target frequency, or lowering the reselection priority of reselection to the first cell to a third priority, or lowering the frequency priority of the target frequency to a fourth priority,
wherein the first priority is higher than the third priority, and the second priority is higher than the fourth priority.

6. The method of claim 1, wherein determining the frequency priority of the frequency from the slice-based frequency priorities based on the slice information comprises:
based on the slice information, determining the frequency priority of the frequency, according to a number of target slices supported by the frequency, as well as frequency priorities corresponding to the target slices supported by the frequency.

7. The method of claim 6, wherein the based on the slice information, determining the frequency priority of the frequency, according to the number of target slices supported by the frequency, as well as the frequency priorities corresponding to the target slices supported by the frequency comprises:
in response to that the slice-based frequency priority is acquired, determining the frequency priority of the frequency, according to the number of target slices supported by the frequency, as well as the frequency priorities corresponding to the target slices supported by the frequency.

8. The method of any one of claims 1 to 7, wherein one of the following applies:
the frequency priority of the frequency is positively correlated with a number of target slices supported by the frequency; or
in response to a number of target slices supported by the frequency reaching a threshold or being maximal, the frequency priority of the frequency is a highest frequency priority.

9. An apparatus for using slice information, comprising:
a performing module (801), configured to perform at least one of cell selection, cell measurement, cell search, or cell reselection based on slice information,
**characterized in that** the performing module (801) comprises:
a determining sub-module (8011), configured to, for a frequency corresponding to different cells, when slice-based frequency priorities of the frequency for different slices supported by the different cells are different, determine a frequency priority of the frequency from the slice-based frequency priorities based on the slice information; and
the performing module (801) is further configured to perform the at least one of cell selection, cell measurement, cell search, or cell reselection according to the frequency priority,
wherein the slice information comprises at least one of:
a first correspondence between a slice and a frequency;
a second correspondence among the slice, the frequency, and a cell identity;
a third correspondence among the slice, the frequency, and the slice-based frequency priority;
a fourth correspondence among the slice, the frequency, the slice-based frequency priority, and the cell identity;
the slice-based frequency priority;
a slice list of user equipment, UE, desired slices; or
a slice priority,
wherein the determining sub-module (8011) is specifically configured to: in response to that a slice-based frequency priority for the frequency is not acquired, determine the frequency priority of the frequency to be a first frequency priority, wherein the first frequency priority is determined based on the frequency,
wherein the determining sub-module (8011) is specifically configured to:
based on the slice information, determine the frequency priority of the frequency according to whether the frequency supports a target slice, and
wherein the determining sub-module (8011) is specifically configured to: in response to that the slice-based frequency priority is not acquired, or in response to that the slice-based frequency priority is acquired, determine the frequency priority of the frequency according to whether the frequency supports the target slice.

10. The apparatus of claim 9, wherein the determining sub-module (8011) is further configured to determine the frequency priority of the frequency from the slice-based frequency priorities based on the slice information, by:
in response to that the slice-based frequency priority is acquired, determining the frequency priority of the frequency based on the slice information.

11. The apparatus of claim 9 or 10, wherein a frequency priority of the frequency applied during cell measurement or cell search is identical to, or different from, a frequency priority of the frequency applied during cell reselection or cell selection, and
wherein the performing module (801) is further configured to perform one of the following:
performing the at least one of cell measurement, cell search, cell reselection, or cell selection using the frequency priority of the frequency determined based on the slice information; or
performing cell measurement or cell search using the first frequency priority of the frequency, wherein the first frequency priority is determined based on the frequency; and performing cell reselection or cell selection using the frequency priority of the frequency determined based on the slice information; and
wherein the performing module (801) further comprises:
an adjusting sub-module (8012), configured to adjust at least one of a candidate cell or a target frequency based on slice information corresponding to the candidate cell or whether the candidate cell supports a target slice, wherein the target frequency is a frequency corresponding to the candidate cell.

12. The apparatus of claim 11, wherein the candidate cell comprises a first cell, and
wherein the adjusting sub-module (8012) is further configured to perform one of the following:
in response to that the first cell supports the target slice, raising a reselection priority of reselection to the first cell to a first priority, or raising a frequency priority of the target frequency to a second priority; or
in response to that the first cell does not support the target slice, skipping the first cell, or skipping the target frequency, or lowering the reselection priority of reselection to the first cell to a third priority, or lowering the frequency priority of the target frequency to a fourth priority,
wherein the first priority is higher than the third priority, and the second priority is higher than the fourth priority.

## Patentansprüche

1. Verfahren zum Verwenden von Slice-Informationen, das von einem Endgerät ausgeführt wird, umfassend:
Ausführen (302) mindestens einer von einer Zellenauswahl, einer Zellenmessung, einer Zellensuche oder einer Zellenneuauswahl basierend auf Slice-Informationen,
**dadurch gekennzeichnet, dass** das Ausführen (302) der mindestens einen von Zellenauswahl, Zellenmessung, Zellensuche oder Zellenneuauswahl basierend auf den Slice-Informationen umfasst:
für eine Frequenz, die verschiedenen Zellen entspricht, wenn Slice-basierte Frequenzprioritäten der Frequenz für verschiedene Slices, die von den verschiedenen Zellen unterstützt werden, unterschiedlich sind, Bestimmen einer Frequenzpriorität der Frequenz aus den Slice-basierten Frequenzprioritäten basierend auf den Slice-Informationen; und
Ausführen (404, 504, 604, 704) der mindestens einen von Zellenauswahl, Zellenmessung, Zellensuche oder Zellenneuauswahl gemäß der Frequenzpriorität,
wobei die Slice-Informationen mindestens eine umfassen von:
einer ersten Entsprechung zwischen einem Slice und einer Frequenz;
einer zweiten Entsprechung zwischen dem Slice, der Frequenz und einer Zellidentität;
einer dritten Entsprechung zwischen dem Slice, der Frequenz und der Slice-basierten Frequenzpriorität;
einer vierten Entsprechung zwischen dem Slice, der Frequenz, der Slice-basierten Frequenzpriorität und der Zellidentität;
der Slice-basierten Frequenzpriorität;
einer Slice-Liste mit von Endgeräten, UE, erwünschten Slices; oder
einer Slice-Priorität, und
wobei das Verfahren ferner umfasst:
als Reaktion darauf, dass eine Slice-basierte Frequenzpriorität für die Frequenz nicht erfasst wird, Bestimmen der Frequenzpriorität der Frequenz als eine erste Frequenzpriorität, wobei die erste Frequenzpriorität basierend auf der Frequenz bestimmt wird,
wobei das Verfahren ferner umfasst:
basierend auf den Slice-Informationen, Bestimmen der Frequenzpriorität der Frequenz, je nachdem ob die Frequenz einen Ziel-Slice unterstützt, umfassend:
als Reaktion darauf, dass die Slice-basierte Frequenzpriorität nicht erfasst wird, oder als Reaktion darauf, dass die Slice-basierte Frequenzpriorität erfasst wird, Bestimmen der Frequenzpriorität der Frequenz je nachdem ob die Frequenz den Ziel-Slice unterstützt.

2. Verfahren nach Anspruch 1, wobei das Bestimmen der Frequenzpriorität der Frequenz aus den Slice-basierten Frequenzprioritäten basierend auf den Slice-Informationen umfasst:
als Reaktion darauf, dass die Slice-basierte Frequenzpriorität erfasst wird, Bestimmen der Frequenzpriorität der Frequenz basierend auf den Slice-Informationen.

3. Verfahren nach Anspruch 1 oder 2, wobei
eine Frequenzpriorität der Frequenz, die während der Zellenmessung oder Zellensuche angewendet wird, gleich oder anders ist als eine Frequenzpriorität der Frequenz, die während der Zellenneuauswahl oder Zellenauswahl angewendet wird,
wobei das Verfahren ferner einen der folgenden Schritte umfasst:
Ausführen der mindestens einen von Zellenmessung, Zellensuche, Zellenneuauswahl oder Zellenauswahl unter Verwendung der Frequenzpriorität der Frequenz, die basierend auf den Slice-Informationen bestimmt wird; oder
Ausführen der Zellenmessung oder Zellensuche unter Verwendung der ersten Frequenzpriorität der Frequenz, wobei die erste Frequenzpriorität basierend auf der Frequenz bestimmt wird; und
Ausführen der Zellenneuauswahl oder Zellenauswahl unter Verwendung der Frequenzpriorität der Frequenz, die basierend auf den Slice-Informationen bestimmt wird; und
wobei das Verfahren ferner umfasst:
Anpassen mindestens einer von einer Kandidatenzelle oder einer Zielfrequenz basierend auf Slice-Informationen, die der Kandidatenzelle entsprechen, oder darauf, ob die Kandidatenzelle einen Ziel-Slice unterstützt, wobei die Zielfrequenz eine Frequenz ist, die der Kandidatenzelle entspricht.

4. Verfahren nach Anspruch 3, wobei das Anpassen mindestens einer von der Kandidatenzelle oder der Zielfrequenz basierend auf den Slice-Informationen, die der Kandidatenzelle entsprechen, oder darauf, ob die Kandidatenzelle den Ziel-Slice unterstützt, umfasst:
vor der Zellenmessung, Anpassen mindestens einer von der Kandidatenzelle oder der Zielfrequenz basierend auf den Slice-Informationen, die der Kandidatenzelle entsprechen, oder darauf, ob die Kandidatenzelle den Ziel-Slice unterstützt; oder
vor dem Treffen einer Neuauswahlentscheidung, Anpassen mindestens einer von der Kandidatenzelle oder der Zielfrequenz basierend auf den Slice-Informationen, die der Kandidatenzelle entsprechen, oder darauf, ob die Kandidatenzelle den Ziel-Slice unterstützt; oder
vor der Neuauswahl von der Kandidatenzelle zu einer Zielzelle, Anpassen mindestens einer von der Kandidatenzelle oder der Zielfrequenz basierend auf den Slice-Informationen, die der Kandidatenzelle entsprechen, oder darauf, ob die Kandidatenzelle den Ziel-Slice unterstützt.

5. Verfahren nach Anspruch 3, wobei die Kandidatenzelle eine erste Zelle umfasst, und
wobei das Anpassen mindestens einer von der Kandidatenzelle oder der Zielfrequenz basierend auf den Slice-Informationen, die der Kandidatenzelle entsprechen, oder darauf, ob die Kandidatenzelle den Ziel-Slice unterstützt, umfasst:
als Reaktion darauf, dass die erste Zelle den Ziel-Slice unterstützt, Anheben einer Neuauswahlpriorität der Neuauswahl für die erste Zelle auf eine erste Priorität, oder Anheben einer Frequenzpriorität von der Zielfrequenz auf eine zweite Priorität; oder
als Reaktion darauf, dass die erste Zelle den Ziel-Slice nicht unterstützt, Überspringen der ersten Zelle, oder Überspringen der Zielfrequenz, oder Senken der Neuauswahlpriorität der Neuauswahl für die erste Zelle auf eine dritte Priorität, oder Senken der Frequenzpriorität der Zielfrequenz auf eine vierte Priorität,
wobei die erste Priorität höher als die dritte Priorität ist, und die zweite Priorität höher als die vierte Priorität ist.

6. Verfahren nach Anspruch 1, wobei das Bestimmen der Frequenzpriorität der Frequenz aus den Slice-basierten Frequenzprioritäten basierend auf den Slice-Informationen umfasst:
basierend auf den Slice-Informationen, Bestimmen der Frequenzpriorität der Frequenz gemäß einer Anzahl von Ziel-Slices, die von der Frequenz unterstützt werden, sowie von Frequenzprioritäten, die den Ziel-Slices entsprechen, die von der Frequenz unterstützt werden.

7. Verfahren nach Anspruch 6, wobei, basierend auf den Slice-Informationen, das Bestimmen der Frequenzpriorität der Frequenz gemäß der Anzahl von Ziel-Slices, die von der Frequenz unterstützt werden, sowie der Frequenzprioritäten, die den Ziel-Slices entsprechen, die von der Frequenz unterstützt werden, umfasst:
als Reaktion darauf, dass die Slice-basierte Frequenzpriorität erfasst wird, Bestimmen der Frequenzpriorität der Frequenz gemäß der Anzahl von Ziel-Slices, die von der Frequenz unterstützt werden, sowie der Frequenzprioritäten, die den Ziel-Slices entsprechen, die von der Frequenz unterstützt werden.

8. Verfahren nach einem der Ansprüche 1 bis 7, wobei eines der folgenden Elemente gilt:
die Frequenzpriorität der Frequenz korreliert positiv mit einer Anzahl von Ziel-Slices, die von der Frequenz unterstützt werden; oder
als Reaktion darauf, dass eine Anzahl von Ziel-Slices, die von der Frequenz unterstützt werden, eine Schwelle erreicht oder maximal ist, ist die Frequenzpriorität der Frequenz eine höchste Frequenzpriorität.

9. Gerät zum Verwenden von Slice-Informationen, umfassend:
ein Ausführungsmodul (801), das dazu konfiguriert ist, mindestens eine von einer Zellenauswahl, einer Zellenmessung, einer Zellensuche oder einer Zellenneuauswahl basierend auf Slice-Informationen auszuführen,
**dadurch gekennzeichnet, dass** das Ausführungsmodul (801) umfasst:
ein Bestimmungs-Untermodul (8011), das dazu konfiguriert ist, für eine Frequenz, die verschiedenen Zellen entspricht, wenn Slice-basierte Frequenzprioritäten der Frequenz für verschiedene Slices, die von den verschiedenen Zellen unterstützt werden, unterschiedlich sind, eine Frequenzpriorität der Frequenz aus den Slice-basierten Frequenzprioritäten basierend auf den Slice-Informationen zu bestimmen; und
wobei das Ausführungsmodul (801) ferner dazu konfiguriert ist, die mindestens eine von Zellenauswahl, Zellenmessung, Zellensuche oder Zellenneuauswahl gemäß der Frequenzpriorität auszuführen,
wobei die Slice-Informationen mindestens eine umfassen von:
einer ersten Entsprechung zwischen einem Slice und einer Frequenz;
einer zweiten Entsprechung zwischen dem Slice, der Frequenz und einer Zellidentität;
einer dritten Entsprechung zwischen dem Slice, der Frequenz und der Slice-basierten Frequenzpriorität;
einer vierten Entsprechung zwischen dem Slice, der Frequenz, der Slice-basierten Frequenzpriorität und der Zellidentität;
der Slice-basierten Frequenzpriorität;
einer Slice-Liste mit von Endgeräten, UE, erwünschten Slices; oder
einer Slice-Priorität,
wobei das Bestimmungs-Untermodul (8011) insbesondere konfiguriert ist zum: als Reaktion darauf, dass eine Slice-basierte Frequenzpriorität für die Frequenz nicht erfasst wird, Bestimmen der Frequenzpriorität der Frequenz als eine erste Frequenzpriorität, wobei die erste Frequenzpriorität basierend auf der Frequenz bestimmt wird,
wobei das Bestimmungs-Untermodul (8011) insbesondere konfiguriert ist zum:
basierend auf den Slice-Informationen, Bestimmen der Frequenzpriorität der Frequenz, je nachdem ob die Frequenz einen Ziel-Slice unterstützt, und
wobei das Bestimmungs-Untermodul (8011) insbesondere konfiguriert ist zum: als Reaktion darauf, dass die Slice-basierte Frequenzpriorität nicht erfasst wird, oder als Reaktion darauf, dass die Slice-basierte Frequenzpriorität erfasst wird, Bestimmen der Frequenzpriorität der Frequenz, je nachdem ob die Frequenz den Ziel-Slice unterstützt.

10. Gerät nach Anspruch 9, wobei das Bestimmungs-Untermodul (8011) ferner dazu konfiguriert ist, die Frequenzpriorität der Frequenz aus den Slice-basierten Frequenzprioritäten basierend auf den Slice-Informationen zu bestimmen, durch:
als Reaktion darauf, dass die Slice-basierte Frequenzpriorität erfasst wird, Bestimmen der Frequenzpriorität der Frequenz basierend auf den Slice-Informationen.

11. Gerät nach Anspruch 9 oder 10, wobei eine Frequenzpriorität der Frequenz, die während der Zellenmessung oder Zellensuche angewendet wird, gleich oder anders ist als eine Frequenzpriorität der Frequenz, die während der Zellenneuauswahl oder Zellenauswahl angewendet wird, und
wobei das Ausführungsmodul (801) ferner dazu konfiguriert ist, einen der folgenden Schritte auszuführen:
Ausführen der mindestens einen von Zellenmessung, Zellensuche, Zellenneuauswahl oder Zellenauswahl unter Verwendung der Frequenzpriorität der Frequenz, die basierend auf den Slice-Informationen bestimmt wird; oder
Ausführen der Zellenmessung oder Zellensuche unter Verwendung der ersten Frequenzpriorität der Frequenz, wobei die erste Frequenzpriorität basierend auf der Frequenz bestimmt wird; und
Ausführen einer Zellenneuauswahl oder Zellenauswahl unter Verwendung der Frequenzpriorität der Frequenz, die basierend auf den Slice-Informationen bestimmt wird; und
wobei das Ausführungsmodul (801) ferner umfasst:
ein Anpassungs-Untermodul (8012), das dazu konfiguriert ist, mindestens eine von einer Kandidatenzelle oder einer Zielfrequenz basierend auf Slice-Informationen, die der Kandidatenzelle entsprechen, oder darauf, ob die Kandidatenzelle einen Ziel-Slice unterstützt, anzupassen, wobei die Zielfrequenz eine Frequenz ist, die der Kandidatenzelle entspricht.

12. Gerät nach Anspruch 11, wobei die Kandidatenzelle eine erste Zelle umfasst, und
wobei das Anpassungs-Untermodul (8012) ferner dazu konfiguriert ist, einen der folgenden Schritte auszuführen:
als Reaktion darauf, dass die erste Zelle den Ziel-Slice unterstützt, Anheben einer Neuauswahlpriorität der Neuauswahl für die Zelle auf eine erste Priorität, oder Anheben einer Frequenzpriorität der Zielfrequenz auf eine zweite Priorität; oder
als Reaktion darauf, dass die erste Zelle den Ziel-Slice nicht unterstützt, Überspringen der ersten Zelle, oder Überspringen der Zielfrequenz, oder Senken der Neuauswahlpriorität der Neuauswahl für die erste Zelle auf eine dritte Priorität, oder Senken der Frequenzpriorität der Zielfrequenz auf eine vierte Priorität,
wobei die erste Priorität höher als die dritte Priorität ist, und die zweite Priorität höher als die vierte Priorität ist.

## Revendications

1. Procédé pour utiliser des informations de tranche, réalisé par un dispositif terminal, comprenant les étapes suivantes :
réaliser (302) une sélection de cellule, une mesure de cellule, une recherche de cellule et/ou une resélection de cellule en fonction d'informations de tranche,
**caractérisé en ce que** la réalisation (302) de la sélection de cellule, de la mesure de cellule, de la recherche de cellule et/ou de la resélection de cellule en fonction des informations de tranche comprend ce qui suit :
pour une fréquence correspondant à différentes cellules, lorsque des priorités de fréquence basées sur les tranches de la fréquence pour différentes tranches prises en charge par les différentes cellules sont différentes, déterminer une priorité de fréquence de la fréquence à partir des priorités de fréquence basées sur les tranches en fonction des informations de tranche ; et
réaliser (404, 504, 604, 704) la sélection de cellule, la mesure de cellule, la recherche de cellule et/ou la resélection de cellule selon la priorité de fréquence, dans lequel les informations de tranche comprennent au moins une parmi :
une première correspondance entre une tranche et une fréquence ;
une deuxième correspondance entre la tranche, la fréquence et une identité de cellule ;
une troisième correspondance entre la tranche, la fréquence et la priorité de fréquence basée sur la tranche ;
une quatrième correspondance entre la tranche, la fréquence, la priorité de fréquence basée sur la tranche et l'identité de cellule ;
la priorité de fréquence basée sur la tranche ;
une liste de tranches souhaitées d'équipement utilisateur, UE ; ou
une priorité de tranche, et
dans lequel procédé comprend en outre l'étape suivante :
en réponse à la non acquisition d'une priorité de fréquence basée sur la tranche pour la fréquence, déterminer la priorité de fréquence de la fréquence comme étant une première priorité de fréquence, dans lequel la première priorité de fréquence est déterminée en fonction de la fréquence,
dans lequel le procédé comprend en outre l'étape suivante :
en fonction des informations de tranche, déterminer la priorité de fréquence de la fréquence selon que la fréquence prend en charge ou non une tranche cible, comprenant :
en réponse à la non acquisition de la priorité de fréquence basée sur la tranche, ou en réponse à l'acquisition de la priorité de fréquence basée sur la tranche, déterminer la priorité de fréquence de la fréquence selon que la fréquence prend en charge ou non la tranche cible.

2. Procédé selon la revendication 1, dans lequel la détermination de la priorité de fréquence de la fréquence à partir des priorités de fréquence basées sur les tranches en fonction des informations de tranche comprend ce qui suit :
en réponse à l'acquisition de la priorité de fréquence basée sur la tranche, déterminer la priorité de fréquence de la fréquence en fonction des informations de tranche.

3. Procédé selon la revendication 1 ou 2, dans lequel
une priorité de fréquence de la fréquence appliquée pendant une mesure de cellule ou une recherche de cellule est identique à une priorité de fréquence de la fréquence appliquée pendant une resélection de cellule ou une sélection de cellule, ou est différente de celle-ci,
dans lequel le procédé comprend en outre l'une des étapes suivantes :
réaliser la mesure de cellule, la recherche de cellule, la resélection de cellule et/ou la sélection de cellule en utilisant la priorité de fréquence de la fréquence déterminée en fonction des informations de tranche ; ou
réaliser une mesure de cellule ou une recherche de cellule en utilisant la première priorité de fréquence de la fréquence, dans lequel la première priorité de fréquence est déterminée en fonction de la fréquence ; et réaliser une resélection de cellule ou une sélection de cellule en utilisant la priorité de fréquence de la fréquence déterminée en fonction des informations de tranche ; et
dans lequel le procédé comprend en outre l'étape suivante :
ajuster une cellule candidate et/ou une fréquence cible en fonction d'informations de tranche correspondant à la cellule candidate ou selon que la cellule candidate prend en charge ou non une tranche cible, dans lequel la fréquence cible est une fréquence correspondant à la cellule candidate.

4. Procédé selon la revendication 3, dans lequel l'ajustement de la cellule candidate et/ou de la fréquence cible en fonction des informations de tranche correspondant à la cellule candidate ou selon que la cellule candidate prend en charge ou non la tranche cible comprend ce qui suit :
avant la mesure de cellule, ajuster la cellule candidate et/ou la fréquence cible en fonction des informations de tranche correspondant à la cellule candidate ou selon que la cellule candidate prend en charge ou non la tranche cible ; ou
avant de prendre une décision de resélection, ajuster la cellule candidate et/ou la fréquence cible en fonction des informations de tranche correspondant à la cellule candidate ou selon que la cellule candidate prend en charge ou non la tranche cible ; ou
avant la resélection de la cellule candidate à une cellule cible, ajuster la cellule candidate et/ou la fréquence cible en fonction des informations de tranche correspondant à la cellule candidate ou selon que la cellule candidate prend en charge ou non la tranche cible.

5. Procédé selon la revendication 3, dans lequel la cellule candidate comprend une première cellule, et
dans lequel l'ajustement de la cellule candidate et/ou de la fréquence cible en fonction des informations de tranche correspondant à la cellule candidate ou selon que la cellule candidate prend en charge ou non la tranche cible comprend ce qui suit :
en réponse à prise en charge de la tranche cible par la première cellule, élever une priorité de resélection pour resélectionner la première cellule à une première priorité, ou élever une priorité de fréquence de la fréquence cible à une deuxième priorité ; ou
en réponse à la non prise en charge de la tranche cible par la première cellule, sauter la première cellule ou la fréquence cible, abaisser la priorité de resélection pour resélectionner la première cellule à une troisième priorité, ou abaisser la priorité de fréquence de la fréquence cible à une quatrième priorité,
dans lequel la première priorité est supérieure à la troisième priorité, et la deuxième priorité est supérieure à la quatrième priorité.

6. Procédé selon la revendication 1, dans lequel la détermination de la priorité de fréquence de la fréquence à partir des priorités de fréquence basées sur les tranches en fonction des informations de tranche comprend ce qui suit :
en fonction des informations de tranche, déterminer la priorité de fréquence de la fréquence selon un nombre de tranches cibles prises en charge par la fréquence ainsi que des priorités de fréquence correspondant à la tranches cibles prises en charge par la fréquence.

7. Procédé selon la revendication 6, dans lequel la détermination, en fonction des informations de tranche, de la priorité de fréquence de la fréquence selon le nombre de tranches cibles prises en charge par la fréquence ainsi que les priorités de fréquence correspondant à la tranches cibles prises en charge par la fréquence comprend ce qui suit :
en réponse à l'acquisition de la priorité de fréquence basée sur la tranche, déterminer la priorité de fréquence de la fréquence selon le nombre de tranches cibles prises en charge par la fréquence ainsi que les priorités de fréquence correspondant à la tranches cibles prises en charge par la fréquence.

8. Procédé selon l'une quelconque des revendications 1 à 7, dans lequel l'un des cas suivants s'applique :
la priorité de fréquence de la fréquence est corrélée positivement avec un nombre de tranches cibles prises en charge par la fréquence ; ou
lorsqu'un nombre de tranches cibles prises en charge par la fréquence atteint un seuil ou qu'il est maximal, la priorité de fréquence de la fréquence est la priorité de fréquence la plus élevée.

9. Appareil pour utiliser des informations de tranche, comprenant :
un module de réalisation (801) configuré pour réaliser une sélection de cellule, une mesure de cellule, une recherche de cellule et/ou une resélection de cellule en fonction d'informations de tranche,
**caractérisé en ce que** le module de réalisation (801) comprend ce qui suit :
un sous-module de détermination (8011) configuré pour, pour une fréquence correspondant à différentes cellules, lorsque des priorités de fréquence basées sur les tranches de la fréquence pour différentes tranches prises en charge par les différentes cellules sont différentes, déterminer une priorité de fréquence de la fréquence à partir des priorités de fréquence basées sur les tranches en fonction des informations de tranche ; et
le module de réalisation (801) est en outre configuré pour réaliser la sélection de cellule, la mesure de cellule, la recherche de cellule et/ou la resélection de cellule selon la priorité de fréquence,
dans lequel les informations de tranche comprennent au moins une parmi :
une première correspondance entre une tranche et une fréquence ;
une deuxième correspondance entre la tranche, la fréquence et une identité de cellule ;
une troisième correspondance entre la tranche, la fréquence et la priorité de fréquence basée sur la tranche ;
une quatrième correspondance entre la tranche, la fréquence, la priorité de fréquence basée sur la tranche et l'identité de cellule ;
la priorité de fréquence basée sur la tranche ;
une liste de tranches souhaitées d'équipement utilisateur, UE ; ou
une priorité de tranche,
dans lequel le sous-module de détermination (8011) est spécifiquement configuré pour : en réponse à la non acquisition d'une priorité de fréquence basée sur la tranche pour la fréquence, déterminer la priorité de fréquence de la fréquence comme étant une première priorité de fréquence, dans lequel la première priorité de fréquence est déterminée en fonction de la fréquence,
dans lequel le sous-module de détermination (8011) est spécifiquement configuré pour :
en fonction des informations de tranche, déterminer la priorité de fréquence de la fréquence selon que la fréquence prend en charge ou non une tranche cible, et
dans lequel le sous-module de détermination (8011) est spécifiquement configuré pour : en réponse à la non acquisition de la priorité de fréquence basée sur la tranche, ou en réponse à l'acquisition de la priorité de fréquence basée sur la tranche, déterminer la priorité de fréquence de la fréquence selon que la fréquence prend en charge ou non la tranche cible.

10. Appareil selon la revendication 9, dans lequel le sous-module de détermination (8011) est en outre configuré pour déterminer la priorité de fréquence de la fréquence à partir des priorités de fréquence basées sur les tranches en fonction des informations de tranche :
en réponse à l'acquisition de la priorité de fréquence basée sur la tranche, en déterminant la priorité de fréquence de la fréquence en fonction des informations de tranche.

11. Appareil selon la revendication 9 ou 10, dans lequel une priorité de fréquence de la fréquence appliquée pendant une mesure de cellule ou une recherche de cellule est identique à une priorité de fréquence de la fréquence appliquée pendant une resélection de cellule ou une sélection de cellule, ou est différente de celle-ci, et
dans lequel le module de réalisation (801) est en outre configuré pour réaliser l'une des étapes suivantes :
réaliser la mesure de cellule, la recherche de cellule, la resélection de cellule et/ou la sélection de cellule en utilisant la priorité de fréquence de la fréquence déterminée en fonction des informations de tranche ; ou
réaliser une mesure de cellule ou une recherche de cellule en utilisant la première priorité de fréquence de la fréquence, dans lequel la première priorité de fréquence est déterminée en fonction de la fréquence ; et réaliser une resélection de cellule ou une sélection de cellule en utilisant la priorité de fréquence de la fréquence déterminée en fonction des informations de tranche ; et
dans lequel le module de réalisation (801) comprend en outre :
un sous-module d'ajustement (8012) configuré pour ajuster une cellule candidate et/ou une fréquence cible en fonction d'informations de tranche correspondant à la cellule candidate ou selon que la cellule candidate prend en charge ou non une tranche cible, dans lequel la fréquence cible est une fréquence correspondant à la cellule candidate.

12. Appareil selon la revendication 11, dans lequel la cellule candidate comprend une première cellule, et
dans lequel le sous-module d'ajustement (8012) est en outre configuré pour réaliser l'une des étapes suivantes :
en réponse à prise en charge de la tranche cible par la première cellule, élever une priorité de resélection pour resélectionner la première cellule à une première priorité, ou élever une priorité de fréquence de la fréquence cible à une deuxième priorité ; ou
en réponse à la non prise en charge de la tranche cible par la première cellule, sauter la première cellule ou la fréquence cible, abaisser la priorité de resélection pour resélectionner la première cellule à une troisième priorité, ou abaisser la priorité de fréquence de la fréquence cible à une quatrième priorité,
dans lequel la première priorité est supérieure à la troisième priorité, et la deuxième priorité est supérieure à la quatrième priorité.
